(19) Europäisches Patentamt / European Patent Office / Office européen des brevets

(11) **EP 2 005 199 B1**

(12) **EUROPEAN PATENT SPECIFICATION**

(45) Date of publication and mention of the grant of the patent:
**29.06.2016 Bulletin 2016/26**

(21) Application number: **07753803.1**

(22) Date of filing: **23.03.2007**

(51) Int Cl.:
**G01C 19/5776** *(2012.01)* **G01C 25/00** *(2006.01)*

(86) International application number:
**PCT/US2007/007205**

(87) International publication number:
**WO 2007/111978 (04.10.2007 Gazette 2007/40)**

(54) **INERTIAL MEASUREMENT SYSTEM AND METHOD WITH BIAS CANCELLATION**

TRÄGHEITSMESSSYSTEM UND VERFAHREN MIT ABWEICHUNGSKORREKTUR

SYSTÈME ET PROCÉDÉ DE MESURE INERTIELLE AVEC SUPPRESSION DE POLARISATION

(84) Designated Contracting States:
**DE FR GB**

(30) Priority: **24.03.2006 US 785911 P**

(43) Date of publication of application:
**24.12.2008 Bulletin 2008/52**

(73) Proprietor: **Custom Sensors & Technologies, Inc.**
**Moorpark, CA 93021 (US)**

(72) Inventors:
• **MOORE, Robert, H.**
**Antioch, CA 94531 (US)**
• **SHIRASAKA, Ichiro**
**Danville, CA 94506 (US)**
• **JAFFE, Randall**
**Clayton, CA 94517 (US)**

(74) Representative: **Boult Wade Tennant**
**Verulam Gardens**
**70 Gray's Inn Road**
**London WC1X 8BT (GB)**

(56) References cited:
**US-A- 3 736 791**  **US-A- 4 590 801**
**US-A- 4 686 711**  **US-A- 5 329 355**
**US-B1- 6 285 111**  **US-B1- 6 467 345**
**US-B2- 6 701 786**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Background of the Invention**

**Field of Invention**

This invention pertains generally to inertial measurement, and, more particularly, to an inertial measurement system and method in which the fixed bias offset of rate sensors or gyroscopes is cancelled.

**Related Art**

Angular rate sensors or gyroscopes (gyros) exhibit a non-zero output in the absence of rotation about the input axis. This non-zero output is called bias, and it can cause significant errors in inertial measurements. The magnitude of the error depends upon the type of sensor or gyroscope used. In applications with stringent limits on offset errors, more expensive sensors with very low residual offset errors must generally be used, and those sensors are often relatively large and heavy.

Heretofore, there have been some attempts to eliminate offset errors by rotating a gyro about the input axis of the sensor, which is bad because it produces a rotation rate signal that must be dealt with. In other systems, horizontal inertial instruments such as gyroscopes and accelerometers have been rotated continuously in carousel fashion about a vertical axis. However, it is not always feasible or even desirable to apply a constant rotation to such instruments.

With ring laser gyros, certain errors have been eliminated by dithering the sensors about the input axis. However, as noted above, rotating a sensor about its input axis is undesirable because it provides an angular rate input other than the one to be detected.

In inertial systems of the prior art it is also necessary to rely on complex models to predict variation in offsets over time and due to factors such as temperature. These models can be quite useful in some applications, but it is often necessary to cancel offsets to a higher level of precision than the models can provide.

US 3,736,791 describes a gyro axis perturbation technique for calibrating inertial navigation systems. The method measures misalignment of the gyro input axis relative to a nominally perpendicular pitch axis.

**Objects and Summary of the Invention**

It is in general an object of the invention to provide a new and improved system and method for inertial measurement in which bias offset is cancelled.

Another object of the invention is to provide a system and method of the above character which overcome the limitations and disadvantages of the prior art.

These and other objects are achieved in accordance with the inertial measurement system of claim 1.

**Brief Description of the Drawings**

Figure 1 is a schematic illustration of an inertial rate system with gyro bias washout modulation.

Figure 2 is a schematic perspective view of a rate sensor system.

Figure 3 is a top plan view of the system of Figure 1.

Figure 4 is a block diagram of the system of Figure 2 with a system for processing signals from the rate sensors, not falling under the invention.

Figure 5 is a block diagram of the system of Figure 2 with another system for processing signals from the rate sensors, not falling under the invention.

Figures 6 and 7 are block diagrams of additional inertial rate systems with gyro bias washout modulation and means for processing signals from the rate sensors, not falling under the invention.

Figure 8 is a graphical representation of the frequency response of a rate sensor or gyro.

Figures 9 - 12 are block diagrams of inertial rate systems with gyro bias washout modulation and means for processing signals from the rate sensors, whereby the example of figure 12 does not fall under the invention as claimed

Figures 13A - 13C and 14A - 14B are graphical representations of waveforms in an inertial rate system with gyro bias washout modulation.

Figure 15 is a block diagrams of an inertial rate system with gyro bias washout modulation and means for processing signals from the rate sensors, which does not fall under the invention.

Figures 16 - 20 are schematic illustrations of additional inertial rate systems with gyro bias washout modulation.

## Detailed Description

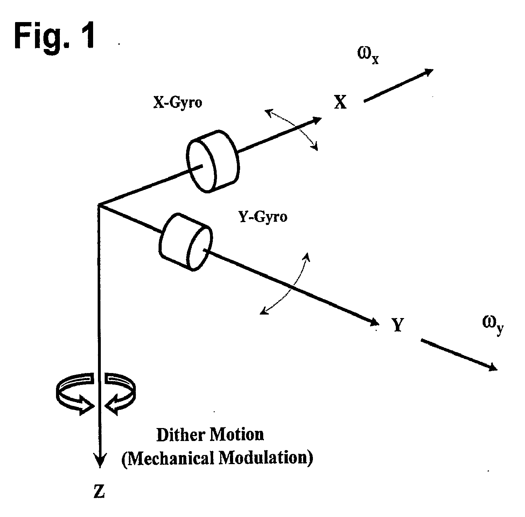

As illustrated in Figure 1, two angular rate sensors or gyroscopes X-Gyro and Y-Gyro have their input axes aligned with the x- and y-axes, respectively. Input axis modulation or dither introduces an oscillatory rotation about the z-axis which is perpendicular to the input axes. The dither oscillation can range in frequency from a few milliHertz to 100 Hertz, or more, depending upon the type of dithering motion employed, with lower frequencies being used for square wave modulation or two-point indexing dither and higher frequencies being used with sinusoidal and other periodic waveforms. The magnitude of the dither is typically on the order of a few milliradians to 20 degrees, but it can potentially be as high as +-90 degrees if input axis reversal is desired.

The dithering motion causes the input axes of the two rate sensors or gyros to rotate with respect to fixed inertial reference axes, with the change in angular alignment of the sensor axes being equal to the instantaneous angular position of the dither modulation. An angular pickoff device (not shown) detects the angular displacement and provides a signal which is used in processing the signals from the rate sensors to remove the effect of the modulation.

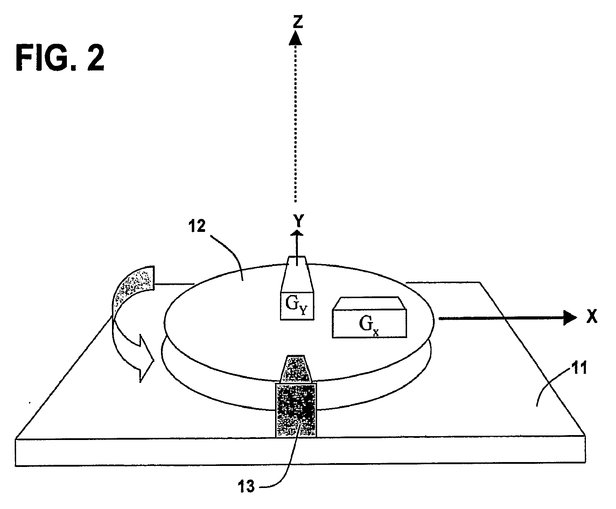

Figure 2 describes a system including a mounting base 11 and two angular rate sensors or gyroscopes $G_x$ and $G_y$ which are mounted on a modulator 12 on the base, with the input axes of the sensors nominally aligned with the x- and y- axes of the base. The modulator rotates the sensors about the z-axis which is perpendicular to input axes of the sensors and to the base. The rotation is oscillatory or dithering in nature, with a frequency on the order of a few milliHertz to several hundred Hertz and an amplitude on the order of several milliradians to tens of degrees. A sensor 13 monitors the position of the modulator and provides a signal corresponding to the instantaneous angular displacement of the modulator and the rate sensors. As discussed more fully hereinafter, that signal allows the system to demodulate or remove the effect of the modulation in connection with the processing of the gyro output signals.

The modulator can be of suitable known design, including oscillating mechanical flexures or springs, voice-coil actuators, galvanometers, piezoelectric actuators, motors, or MEMS-base structures. The amplitude of the modulation should be large enough to provide adequate resolution of the gyro output signals, and the frequency should be higher than the rotation to be measured. For dynamic navigation applications, the frequency of modulation should be high enough so that it is outside the frequency band of the rotation to be measured. For gyrocompassing, where it is assumed that the system is stationary with respect to the earth, the frequency can be much lower. In addition, the modulator must provide stable motion in the plane of the sensor axes. The motion can be of any suitable type, including a simple periodic waveform such as a sine wave or a square wave, or a more complex motion.

While the modulator has been described as a planar structure rotated about an axis perpendicular to its plane, it could be realized in other ways so long as the basic requirement for modulation is met, namely, that of producing a rotation of one or more gyro input axes that results in an oscillation of the orientation of these input axes.

Modulation sensor 13 can also be of conventional design such as a capacitive sensor, an inductive sensor with a coil and magnet, an optical sensor, or an encoder. The rotation of the modulator causes the input axes of the rate sensors or gyros to rotate with respect to the fixed axes of the base, and the difference in alignment between sensor axes and the axes of the base at any given time is equal to the instantaneous angular position of the modulator. Unlike prior art devices which rotate the sensor about the input axis and thereby apply an angular rate input to the sensor, the modulator rotates the input axes themselves, and there is no spurious rate input. The orientation of the input axes is varied in a dithering manner with a relatively rapid, oscillatory motion, and in the absence of other externally applied angular inputs, the rotation of the sensor axes does not produce a rotation rate signal.

The demodulator output signals can be fed into analog signal processing circuitry for producing an analog output of the applied external rotation $\Omega_N$, or they can be converted to a digital signal and processed using digital signal processing (DSP) for filtering, compensation of errors, and output. Alternatively, the outputs of the gyros and the signal conditioning circuit can be in digital form, and the demodulators can be implemented in digital form as well.

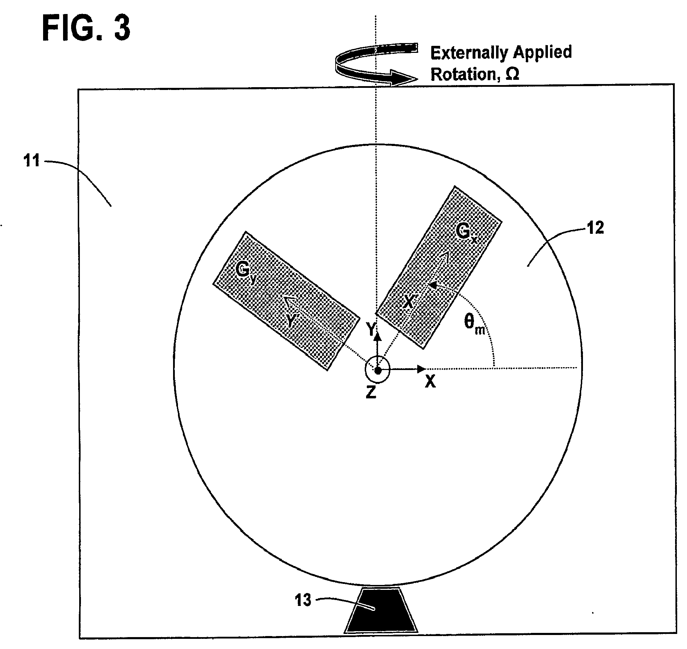

In Figure 3, the input axes x', y' of the rate sensors or gyros are shown as being rotated by an angle $\theta_m$ with respect to the fixed reference axes x, y of the base. The z-axis is perpendicular to the plane of the figure, and an external rate of rotation $\Omega$ is applied to the entire system, including the base, about the y-axis.

The modulator oscillates about the z-axis with an amplitude which is typically on the order of 2 milliradians to 20 degrees or more and a frequency on the order of .01 to 20 Hertz, depending upon the type of dither motion to be applied, with higher frequencies of oscillation typically being associated with smaller amplitudes of oscillation. Two-point indexing dither (square wave in angle with respect to time) will, for example, make use of low frequency dither and high angular displacement.

Sensor 13 detects the instantaneous value of $\theta_m$ and provides a signal which is used in processing the output signals from the gyros. That signal allows the system to compensate for the time-varying input axes of rate sensors $G_x$ and $G_y$ as well as being used in demodulating the gyro outputs.

The rate sensors or gyros should have a suitable bandwidth for measurements at the frequency of the input axis modulation, and they should also have low enough noise in the frequency range near the modulation frequency to permit the gyro modulation signals to be adequately resolved.

Prior to demodulation, the output of each rate sensor or gyro consists of a combination of the sensor fixed offset and the externally applied angular rate. Since the modulation affects the applied angular rate, but not the fixed offset, the system is able to distinguish between them.

With the two signals being affected differently by the modulation of the input axis, relatively simple signal processing can be used to separate the two signals, producing a gyro output that is substantially free from the typical effects of gyro offset error or bias. The signal from the modulation sensor, which corresponds to the instantaneous orientation of the axes, is used in conjunction with an input axis demodulator in the processing circuit to remove the effect of the mechanical modulation.

The outputs of the **X** and **Y** gyros on a stationary, leveled plane on the earth can be expressed mathematically, up to the second-order terms, by the following equations:

$$\begin{cases} \omega_x = \Omega_N \cos(\Psi + A\sin\omega t) + B_x + v_x, \\ \quad = \Omega_N \{\cos\Psi[1 - \tfrac{1}{4}A^2(1 - \cos 2\omega t)] - A\sin\Psi\sin\omega t\} + B_x + v_x, \\ \omega_y = -\Omega_N \sin(\Psi + A\sin\omega t) + B_y + v_y, \\ \quad = \Omega_N \{\sin\Psi[1 - \tfrac{1}{4}A^2(1 - \cos 2\omega t)] - A\cos\Psi\sin\omega t\} + B_y + v_y, \end{cases} \qquad (1.1)$$

where is the true heading of the x-axis gyro; $\Omega_N$ is the north component of earth rotation rate at given latitude; $A$ is the modulation amplitude; $\omega$ is the dither angular frequency ($2\pi f$); and $B_i$ and $v_i$ are bias and (Gaussian) random errors of the ith-gyro, respectively.

Extracting the fundamental (*i.e.,* first harmonic) and the second harmonic components from equations (1.1) gives separate frequency terms as follows:

First Harmonic:

$$\begin{cases} H_\omega(\omega_x) = -\Omega_N A\sin\Psi\sin\omega t, \\ H_\omega(\omega_y) = -\Omega_N A\cos\Psi\sin\omega t. \end{cases} \qquad (1.2)$$

Second Harmonic:

$$\begin{cases} H_{2\omega}(\omega_x) = \tfrac{1}{4}\Omega_N A^2 \cos\Psi\cos 2\omega t \\ H_{2\omega}(\omega_y) = \tfrac{1}{4}\Omega_N A^2 \sin\Psi\cos 2\omega t. \end{cases} \qquad (1.3)$$

In equations (1.2) and (1.3), the bias term $B_i$ is not modulated and, therefore is washed out or cancelled, as expected. The noise term $v_i$ however, is not cancelled, and is preferably removed by filtering prior to demodulation. If the noise term is excessive, there will be insufficient resolution of the modulated terms and performance of the sensors may be degraded in, for example, trying to determine heading during an alignment phase.

Sensitivity to misalignment of the gyro input axes with respect to the plane of the dither motion can become a source of error in bias cancellation. A component of the sensor input axes along the dither axis results in some of the dither motion being detected by the gyro. This error term can be quite large compared to the modulation signals to be measured. Misalignment often needs to be kept to as little as 10 μrad, which can be very challenging in a mechanical system.

With the mechanical modulation or dither motion about the z-axis in the embodiment of Figures 2 and 3, the dither rate vector is given by:

$$D^d \equiv (0 \quad 0 \quad A\omega\cos\omega t)^T.$$

Due to possible misalignment angles $\delta\theta_x$ and $\delta\theta_y$ about the z-axis with respect to the x- and y-axes, the dither angular velocity may be transformed to the x- and y-axes using the misalignment matrix $\delta C_d^b$:

$$D^b = \delta C_d^b D^d = \begin{pmatrix} \cos\delta\theta_y & \sin\delta\theta_x\sin\delta\dot\theta_y & \cos\delta\theta_x\sin\delta\theta_y \\ 0 & \cos\delta\theta_x & -\sin\delta\theta_x \\ -\sin\delta\theta_y & \sin\delta\theta_x\cos\delta\theta_y & \cos\delta\theta_x\cos\delta\theta_y \end{pmatrix} \begin{pmatrix} 0 \\ 0 \\ A\omega\cos\omega t \end{pmatrix},$$

$$= \begin{pmatrix} \cos\delta\theta_x\sin\delta\theta_y A\omega\cos\omega t \\ -\sin\delta\theta_x A\omega\cos\omega t \\ \cos\delta\theta_x\cos\delta\theta_y A\omega\cos\omega t \end{pmatrix}$$

Since the dither frequency $\omega = 2\pi f$ creates a relatively high angular rate compared to earth rate, the effect of dither misalignment cannot be ignored. Taking the x and y components, we get the misaligned dither rates with respect to x-, y- and z-axes as follows:

$$\begin{cases} D_x = \cos\delta\theta_x\sin\delta\theta_y A\omega\cos\omega t, \\ D_y = -\sin\delta\theta_x A\omega\cos\omega t \end{cases} \tag{1.4}$$

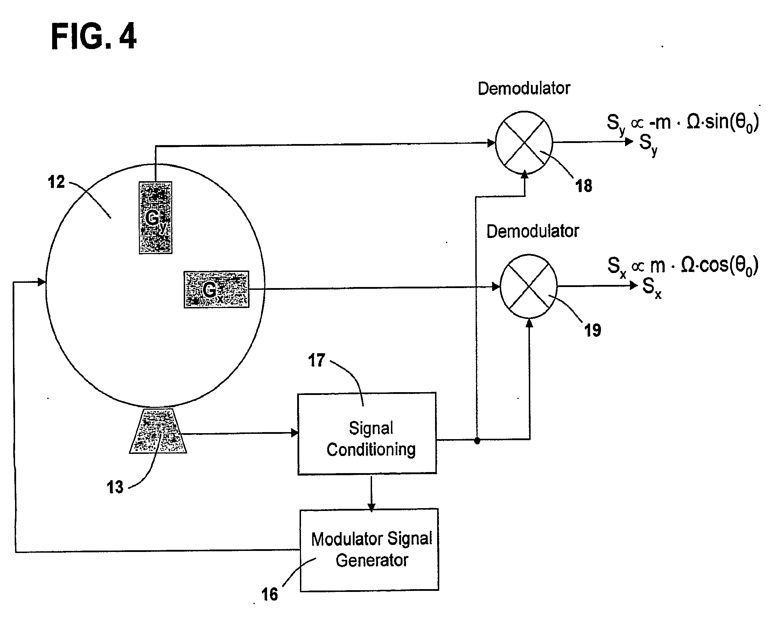

A system utilizing first harmonic demodulation for bias cancellation, which does not fall under the invention as claimed, is illustrated in Figure 4. In the system of Figure 4, modulator 12 is driven by a signal generator 16 which includes an automatic gain control (AGC) circuit. The output of modulation sensor 13 is processed in a conditioning circuit 17, and the conditioning circuit provides a feedback signal to the AGC circuit in the signal generator to maintain the amplitude of the modulation at a constant level. As in Figure 2, the externally applied rotation $\Omega$ is about an axis in the plane of the input axes of the two gyros.

The outputs of the two gyros are applied to the inputs of a pair of demodulators 18, 19, and the output of signal conditioning circuit 17 is applied as a phase reference to the two demodulators. The outputs of the demodulators are the signals $S_x$ and $S_y$ from which the values of applied rotation $\Omega$ and the angle of orientation $\theta_o$ are determined, and by using equations (1.2), for example, the north component of earth rotation rate $\Omega_N$ can be estimated.

Output signals $S_x$ and $S_y$ can be fed to analog signal processing circuitry (not shown) to provide an analog output signal corresponding to the applied external rotation $\Omega$, or they can be converted to digital form and processed digitally for filtering, compensation of errors, and output. Alternatively, the gyros and the signal conditioning circuit can provide digital outputs, and demodulators 18, 19 can be digital as well.

Signals $S_x$ and $S_y$ are subject to corruption by misalignment induced rate errors if the phase reference is not adequately defined or controlled, and misaligned dither rates can directly disturb the first harmonic terms given by equations (1.2). Combining equations (1.2) with the misalignment dither rates in equations (1.4) with respect to the x- and x-axes, rectifying each component by $\cos\omega t$ and $\sin\omega t$ along each axis, and taking their DC components gives the following relationships:

$$\begin{cases} \left\langle [H_{\omega}(\omega_x)+D_x]\cos\omega t \right\rangle_{\omega} = \tfrac{1}{2}\cos\delta\theta_x \sin\delta\theta_y A\omega, \\ \left\langle [H_{\omega}(\omega_x)+D_x]\sin\omega t \right\rangle_{\omega} = -\tfrac{1}{2}\Omega_N A\sin\Psi, \\ \left\langle [H_{\omega}(\omega_y)+D_y]\cos\omega t \right\rangle_{\omega} = -\tfrac{1}{2}\sin\delta\theta_x A\omega, \\ \left\langle [H_{\omega}(\omega_y)+D_y]\sin\omega t \right\rangle_{\omega} = -\tfrac{1}{2}\Omega_N A\cos\Psi, \end{cases} \qquad (1.5)$$

where the bracket $\langle\rangle_{\omega}$ denotes a time-average such that

$$\left\langle \varphi(t) \right\rangle_{\omega} \equiv \tfrac{1}{T_0} \int_0^{T_0} \varphi(t)dt$$

where $\varphi(t)$ is a periodic function whose period is given by $T_0 = 2n\pi/\omega$. Thus, the set of equations in (1.5) represents the mathematical principle of first harmonic bias cancellation in which the misalignment induced errors are demodulated by a particular phase of the dither reference signal (in this example, cosine rectification), whereas the desired earth rate signal is demodulated by the phase of the dither reference signal 90° out-of-phase with respect to the misalignment signal (i.e., sine rectification). As shown in equations (1.5), the first harmonic technique can be used for autonomously calibrating the gyro misalignment angles. This feature is very desirable for autonomous alignment and field calibration of stand-off weapons, among other applications.

From equations (1.5), it can be seen that an arbitrary phase reference signal will result in an output signal that is a superposition of the desired rate signal and the misalignment induced error signal. In the present invention this is overcome by using a demodulation phase reference adjusted for minimum coupling of the misalignment signal. This means that the phase is adjusted to be in quadrature with respect to the phase that would output the maximum misalignment error signal, i.e., sine $\omega t$ demodulation versus cos $\omega t$ demodulation.

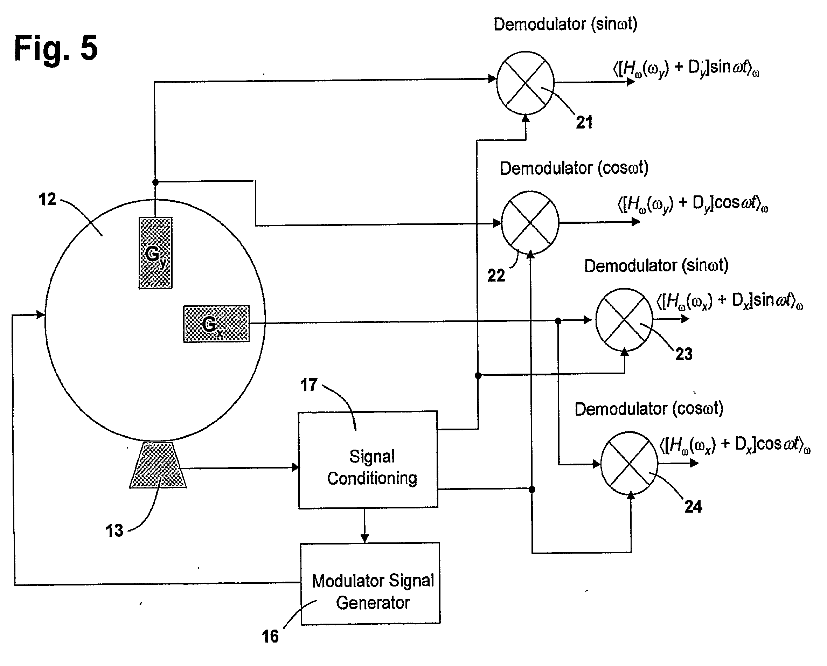

Figure 5 illustrates a system, which does not fall under the invention and in which two demodulations (sin $\omega t$ and cos $\omega t$) are performed. When properly calibrated, the demodulated outputs provide estimates of the quantities in equations (1.5) and permit determination of both the heading ($\psi$) and the misalignment errors ($\delta\theta x$ and $\delta\theta y$).

As illustrated in Figure 5, two gyros $G_x$ and $G_y$ are mounted on a modulator 12 that oscillates about an axis substantially perpendicular to the input axes of the two gyros. The modulator is driven by a modulation signal generator 16 which controls the amplitude of the modulation by means of a feedback signal from the modulator sensor 13 and signal conditioning circuit 17. The feedback signal is used by the modulation signal generator to adjust the modulation signal to maintain a constant amplitude of modulation. Externally applied components of rotation, such as $\Omega_N$, lie in the plane of the modulation.

Signal conditioning circuit 17 provides sin $\omega t$ phase reference signals to demodulators 21, 23 and cos $\omega t$ phase reference signals to demodulators 22, 24. The output of gyro $G_y$ is applied to demodulators 21, 22, and the output of gyro $G_x$ is applied to demodulators 23, 24, with the demodulators providing the four signal outputs corresponding of equations (1.5). Additional signal processing can be performed on these signals to compute $\Omega_N$, heading $\psi$ and misalignment errors $\delta\theta x$ and $\delta\theta y$. If necessary, adjustments to the phase of the two phase reference signals can be made in the signal conditioning.

Although the modulator 12 and modulator pickoff 13 are depicted as being external to gyros $G_x$, $G_y$, they can also be integrated into the sensing elements themselves or into the sensing element packages such that only the sensing elements are dithered as opposed to the entire gyro. This can be significant when the size and mass of the total gyro package is significantly greater than the size and mass of either the sensing elements or sensing element packages. A system of three independently dithered gyros or angular rate sensors can be assembled using three dithered sensors of the type illustrated.

Integration of the modulator into the sensing element package or as a part of the sensing element structure is particularly suitable for very small gyro sensing elements such as MEMS devices which are produced from quartz or silicon wafers using micro-electromechanical techniques. MEMS devices without built-in modulators which are already in production for a variety of applications could be made suitable for higher accuracy applications by combining them with the bias cancellation techniques of the invention. Such a gyro with integrated mechanical modulation can provide improved accuracy by cancelling bias offset without significant cost or size penalties.

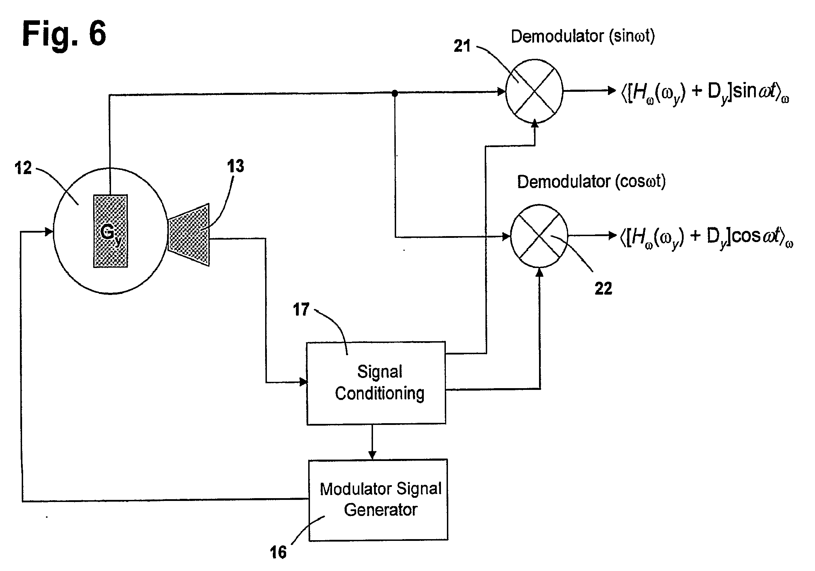

The system of Figure 6, which does not fall under the invention, is similar to that of Figure 5 except that the modulator dithers only a single gyro. The other features of this sytem are the same as in the preceding one.

Unlike the first harmonic signals, the second harmonic signals in equations (1.3) are not affected by misalignment of the gyro input axes with respect to the dither rate because in this case the signal of interest is at twice the modulation frequency, i.e., $2\omega$. The second harmonic terms demodulated by $\cos(2\omega t)$ are:

$$\begin{cases} H_{2\omega}(\omega_x)\cos 2\omega t = \tfrac{1}{4}\Omega_N A^2 \cos\Psi \cos^2 2\omega t = \tfrac{1}{8}\Omega_N A^2 \cos\Psi\left(1+\cos 4\omega t\right) \\ H_{2\omega}(\omega_y)\cos 2\omega t = \tfrac{1}{4}\Omega_N A^2 \sin\Psi \cos^2 2\omega t = \tfrac{1}{8}\Omega_N A^2 \sin\Psi\left(1+\cos 4\omega t\right) \end{cases}$$

and the dc component of these are:

$$\begin{cases} \left\langle H_{2\omega}(\omega_x)\cos 2\omega t\right\rangle_{2\omega} = \tfrac{1}{8}\Omega_N A^2 \cos\Psi, \\ \left\langle H_{2\omega}(\omega_y)\cos 2\omega t\right\rangle_{2\omega} = \tfrac{1}{8}\Omega_N A^2 \sin\Psi. \end{cases} \tag{1.6}$$

The response of the gyros at twice the dither frequency may not be in-phase with respect to the $\cos(2\omega t)$ demodulation reference signal. This may be caused by changes in the gyro phase response at the frequency $f=\omega/\pi$ and is discussed further below.

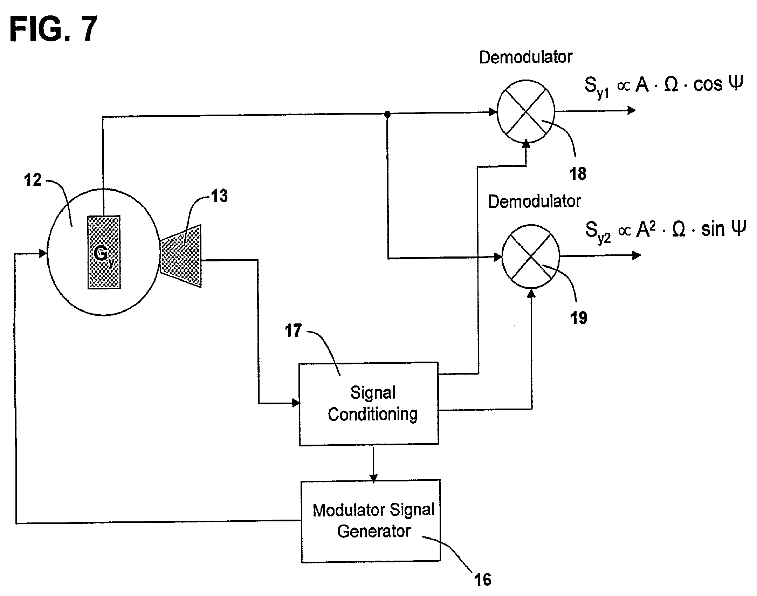

A system utilizing second harmonic demodulation is illustrated Figure 7. This system is similar to that of Figure 4 except that only a single gyro $G_y$ is used, and signal processing circuit 17 provides two frequency reference outputs. One of those outputs has a frequency of $\omega/2\pi$ and is equivalent to the reference signal applied to the demodulators in the system of Figure 4. It is applied to the reference input of demodulator 18. The other output has a frequency of $\omega/\pi$, which is twice the modulation frequency, and is applied to the reference input of demodulator 19. The output of gyro $G_y$ is applied to the signal inputs of both demodulators. As in the system of Figure 4, a modulator feedback signal from sensor 13 and signal conditioning circuit is applied to modulation signal generator 16 for use in controlling the amplitude of the modulation signal.

Demodulator 18 operates in the same manner as the corresponding demodulator in the system of Figure 4. Demodulator 19 operates at twice the modulator frequency and converts the gyro output signal into a signal roughly proportional to the values in equations (1.6), i.e., second-order in the modulation amplitude A.

As in the case of first harmonic demodulation, the second harmonic technique can be enhanced by using two phase references in phase quadrature, e.g., $\sin 2\omega t$ in addition to $\cos 2\omega t$. While all of the desired signal may be obtained using one reference, e.g. $\cos 2\omega t$, phase shifts in the system may cause some of the signal to be in phase with the other term, $\sin 2\omega t$.

The combination of the two second-order demodulation products provides the basis for improved second harmonic bias cancellation. The second harmonic technique has the advantage of being insensitive to misalignment, but it also has the disadvantage of much weaker modulation amplitude since it is a second-order effect.

However, this disadvantage can be overcome by adapting the dither modulation frequency to the specific frequency response characteristics of the gyro being modulated. Some gyros and angular rate sensors do not have constant output sensitivity versus frequency. For example, Coriolis vibratory rate sensors such as quartz tuning fork sensors and micromachined silicon inertial sensors often have an increased sensitivity at specific frequencies. This may correspond, for example, to the difference in frequency between the drive mode or Coriolis reference mode and the sense mode of oscillation.

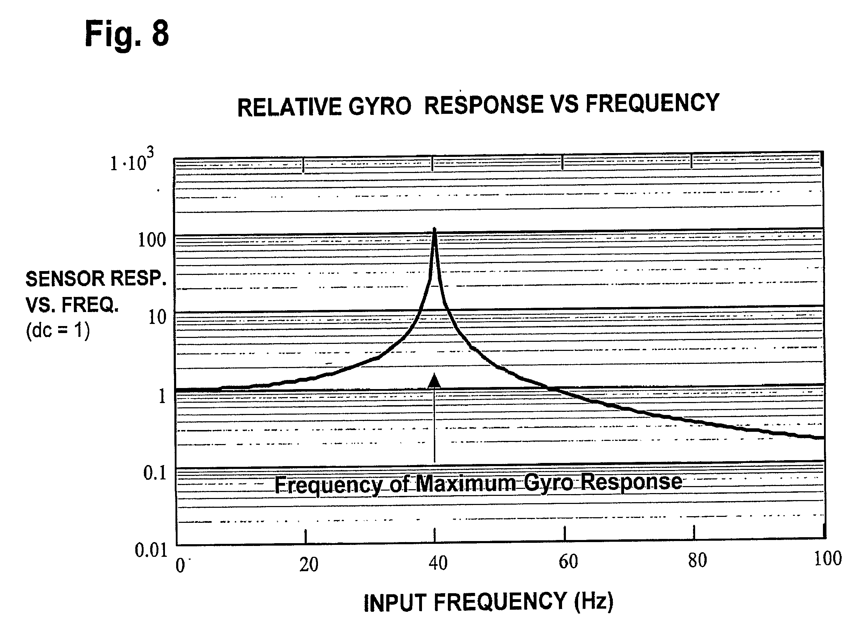

Figure 8 illustrates the frequency response of a high Q quartz tuning fork in graphical form. The example is for the case of a tuning fork with natural frequency of 11 kHz and Q-factor of 30,000. If such a sensor is modulated or dithered at a frequency of 20 Hz, the second harmonic signal will be amplified by two orders of magnitude relative to the dc response of the fork. The gain is nearly as great between the second and first harmonic signal amplification factors. With this technique, the second harmonic is selectively amplified with a corresponding improvement in resolution of the modulation signal.

Since this type of amplification arises due to the resonant characteristics of the sense mode of the tuning fork, a variable phase shift of the modulated signal will result, depending on the difference in frequency between twice the dither frequency and the peak-response frequency of the tuning fork. This phase shift is approximately 90° when the frequencies are matched but can vary significantly for small mismatches in frequency.

As mentioned above, the use of two demodulators with phase references in phase quadrature (*e.g.*, $\sin 2\omega t$ and $\cos 2\omega t$) improves the performance of the second harmonic technique. The total amplitude of response can be made insensitive to small frequency changes by calculating the root sum square (RSS) of the two demodulation products,

specifically, $\langle[H_{2\omega}(\omega_y)]\sin2\omega t\rangle_{2\omega}$ and $\langle[H_{2\omega}(\omega_y)]\cos2\omega t\rangle_{2\omega}$, as shown in Fig. 6.

In addition, the relative amplitudes of the two demodulation products can be used to adjust the dither frequency to keep it adjusted to one-half of the peak response frequency, thereby maintaining maximum response even if the peak response frequency varies, for example, over temperature.

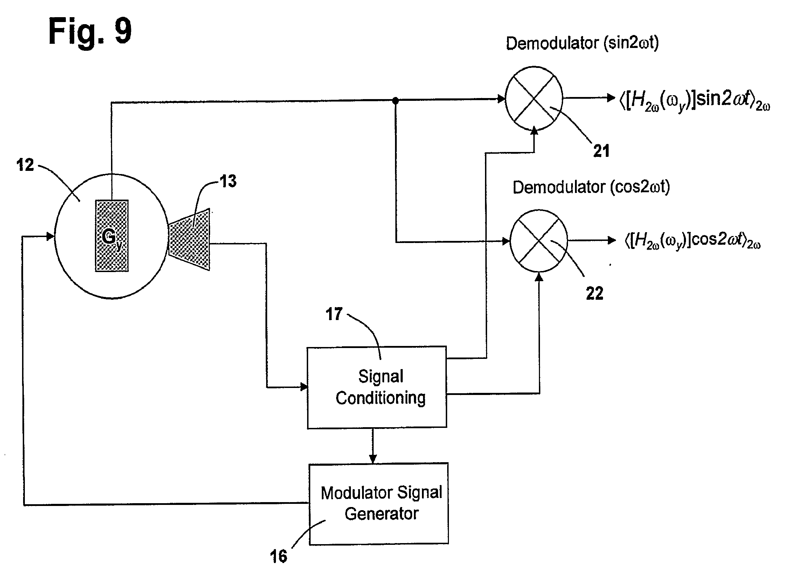

A system with improved second harmonic sensor modulation and demodulation with a single gyro is shown in Figure 9. Gyro $G_y$ is mounted on a modulator 12 which oscillates about an axis substantially perpendicular to the input axis of the gyro. The modulator is driven by a modulation signal generator 16 which controls the amplitude of the modulation by means of a feedback signal from modulation sensor 13 and signal conditioning circuit 17. The feedback signal is used by the modulator signal generator to adjust the modulation signal to maintain a constant amplitude of modulation. The component of externally applied rotation to be measured $\Omega$ lies in a plane perpendicular to the dither axis of the modulator.

The signal conditioning circuit provides a first output signal $\sin2\omega t$ which is applied to demodulator 21 as a phase reference and a second output signal $\cos2\omega t$ which is applied to demodulator 22 as a phase reference. The gyro output is fed into both of the demodulators to provide the two signal outputs, as shown. Additional signal processing can be performed on these signals to estimate the component of $\Omega$ parallel to the average orientation of the input axis of the gyro. Two such gyros mounted in a nominally orthogonal relationship as in Figure 5, but using second harmonic demodulation can be used to estimate heading $\psi$.

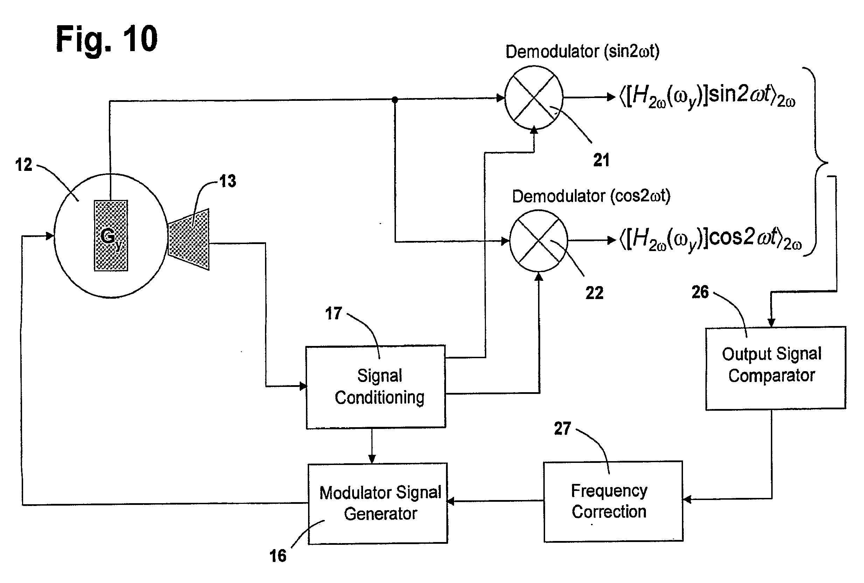

The system Figure 10 is similar to that of Figure 9 with the addition of an output signal comparator 26 and a frequency correction circuit 27. The output signals from demodulators 21, 22 are applied to the comparator, and the output of the comparator is applied to the frequency correction circuit, which applies a correction signal to modulation signal generator 16. By adjusting the modulation frequency, the ratio of the two output signals can be maintained at a constant value, and the circuit can track changes in the difference frequency between the driven mode of oscillation and the sense mode for a Coriolis vibratory gyro.

Either first or second harmonic demodulation provides a means to estimate $\sin\Psi$ and $\cos\Psi$ and thereby to estimate the heading angle $\Psi$ itself, and both types of demodulation can be used for the same gyro to improve the overall accuracy of the sensor or system.

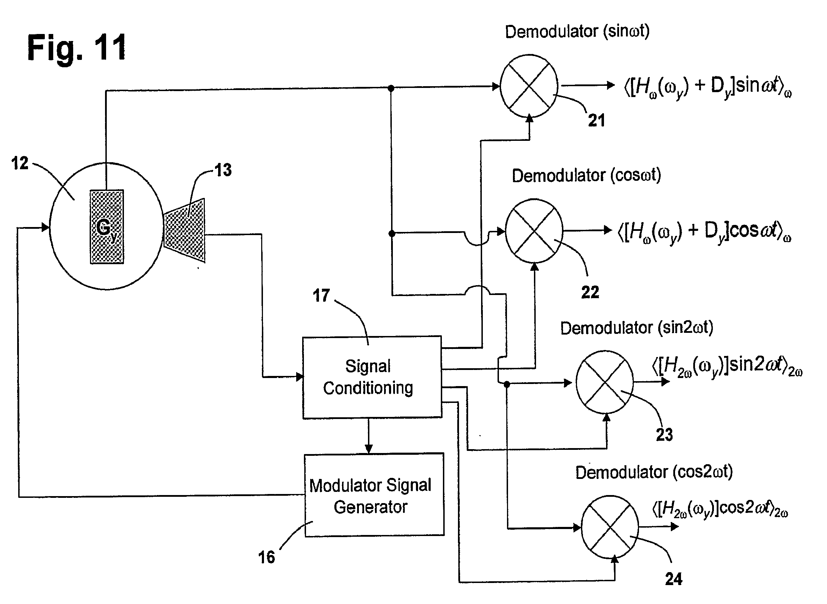

An embodiment utilizing both first and second harmonic sensor modulation and demodulation with a single gyro is shown in Figure 11. This could also be done with a pair of sensors mounted in a nominally orthogonal relationship, as in the embodiment of Figure 5. As in the other embodiments, gyro $G_y$ is mounted on a modulator 12 which oscillates about an axis substantially perpendicular to the input axes of the two gyros. The modulator is driven by a modulation signal generator 16 which receives a feedback signal from modulation sensor 13 and signal conditioning circuit 17. The feedback signal is used by the modulator signal generator to adjust the modulation signal to maintain a constant amplitude of modulation. The component of externally applied rotation to be measured $\Omega_N$ once again lies in a plane perpendicular to the dither axis of the modulator.

In this embodiment, the signal conditioning circuit generates four phase reference signals which correspond to $\sin\omega t$, $\cos\omega t$, $\sin2\omega t$, and $\cos2\omega t$, respectively. These signals are applied to the demodulators as phase references, with the $\sin\omega t$ signal being applied to demodulator 21, the $\cos\omega t$ signal being applied to demodulator 22, the $\sin2\omega t$ signal being applied to demodulator 23, and the $\cos2\omega t$ signal being applied to demodulator 24. The output of the gyro is fed into all four of the demodulators to provide the four signal outputs. Additional signal processing can be performed on these signals to estimate $\Omega_N$ and $\Psi$.

The output of the single gyro in the embodiment of Figure 11 can be used for estimating both $\Omega_N$ and $\Psi$ since the first harmonic demodulation products provide an output proportional to $\Omega_N.\cos\Psi$ (equations 1.5) for y-axis gyro while the second harmonic demodulation products provide an output proportional to $\Omega_N$-$\sin\Psi$ (equations 1.6) for y-axis gyro. The amplitude of the dither (A in the above equations) is determined by the modulator signal generator 16. In the case of gyrocompassing, $\Omega_N$ in the locally level coordinate system may also be known.

A system of three independently dithered gyros or angular rate sensors can be assembled using three dithered sensors as shown here or as in Figures 6 and 9.

The value of such bias washout techniques is readily apparent in that relatively inexpensive gyros or rate sensors can be used in applications typically requiring much more expensive or bulky sensors.

The invention is particularly suitable for use in gyrocompassing applications where the angular velocity of the earth is used to determine north. In such applications, the apparatus is otherwise stationary, and the externally applied rotation is just the rotation of the earth. If the system is locally level, or if the inclination of the system is known by the use of accelerometers, the latitude can also be determined from the component of the earth's rate as measured by the gyros in the horizontal plane of the locally level system. Adjustment for the effect of the modulation amplitude A can be made in the calibration of the system.

As noted above, two key factors in bias cancellation utilizing the techniques disclosed herein are an adequate signal-to-noise ratio and a reduced sensitivity to misalignment of the sensors relative to the applied dither. While second harmonic modulation and demodulation definitely reduces the sensitivity to sensor misalignment, it can result in an inadequate signal-to-noise ratio unless selective amplification of the second harmonic modulation is employed, as described above. First harmonic modulation and demodulation will generally have a superior signal-to-noise ratio, but is inherently sensitive to misalignment of the sensors.

As discussed more fully hereinafter, the invention can be adapted to accurately determine the error in phase of the demodulation reference signals, thereby permitting those signals to be controlled for still further reduction in errors resulting from misalignment of the sensors.

As the analysis leading to equations (1.5) shows, it is possible to reject errors due to sensor misalignment to the dither modulation by providing the correct phase for demodulation. In equations (1.5), the demodulation waveform with the correct phase is $\sin\omega t$. The output obtained using this signal for demodulation is not corrupted by errors due to misalignment. The waveform in phase quadrature with the correct waveform is given by $\cos\omega t$, and the output obtained using this phase reference provides a signal proportional to the misalignment term.

In practical systems, modulator sensor signals will be subject to phase errors due to phase shifts in electronic circuits or to errors in the modulation sensor itself. Therefore, it may be necessary to apply a correction to the phase of the demodulation signals to obtain the ideal signals represented by $\sin\omega t$ and $\cos\omega t$. A phase error of 1° in $\sin\omega t$ will, for example, allow about 1.75% of the full misalignment rate error signal to be added to the true rate signal. Since the misalignment rate error signal can possibly be quite large relative to the rate signals to be resolved, a phase error of 1° or even significantly less may not be tolerable.

To further complicate the calibration of the system, the phase errors can potentially vary with time or as a function of temperature. Therefore, in a sensor or system requiring the maximum possible accuracy and resolution, these errors must be fully accounted for and compensated.

One method for controlling these phase errors is to perform an extensive calibration of phase, including effects due to temperature. This calibration is typically performed as a part of the manufacturing process. Once the phase errors have been determined, one of two methods for compensation can be used. In the first of these methods, the effect of the phase error is mathematically removed from the sensor output at some point after demodulation. This can be done by applying the inverse of the misalignment rotation matrix $\left(\delta C_d^b\right)$ to the demodulation products in equations (1.5).

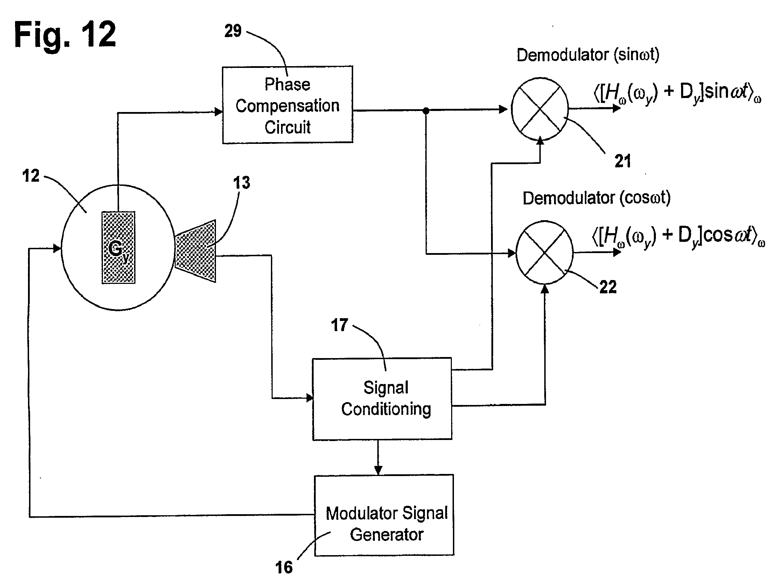

In the second of these methods, a phase correction signal is applied to a phase compensation circuit prior to demodulation such as illustrated in the system of Figure 12, which does not fall under the invention.

This system is similar to that of Figure 6 with the addition of a phase compensation circuit 29 between the output of the gyro and the inputs of the demodulators. Alternatively, the phase correction could be performed in the signal conditioning circuit 17. The phase correction to be applied does not need to be static. It can, for example, be responsive to changes in temperature such that the phase compensation takes temperature change into account. Furthermore, the phase correction can be controlled by an analog or digital signal provided by the system in which the gyro is used. If the actual phase error is estimated by an algorithm within the system, the updated phase compensation signal can be applied on a continuous basis, accounting for changes in temperature, time and other factors.

The actual misalignment and phase errors are calculated and suitable compensation is used to correct for these errors, using either of the methods described above. The determination of the phase errors is accomplished by applying a dither modulation consisting of two distinct frequency waveforms.

When two distinct frequencies are used in a first harmonic modulation waveform, the desired rate signal derived from each of the two frequency components will be proportional to the angular displacement associated with each of the frequency components. However, the misalignment signals associated with the two frequency components will not be equal, but rather will be proportional to the product of the angular displacement and the frequency. The two rate output signals and the two misalignment rate signals are used to compute the actual phase errors and misalignment terms. Correction signals or computations derived from the calculated phase errors are then used to remove the effects of these errors from the system output either before or after demodulation.

In a sensor system with phase error calculation and compensation as described above, which does not fall under the invention, the waveform of one of the two frequency components is approximately a square wave in angle while the other is a sine wave. In this case, the modulator has sufficient dynamic response to provide a rapid movement approximating the desired square wave motion. Of course, the modulator cannot change angle instantaneously, so the rise time of the waveform corresponding to the transition from one angular position to the other is finite, although much less than the period of the waveform.

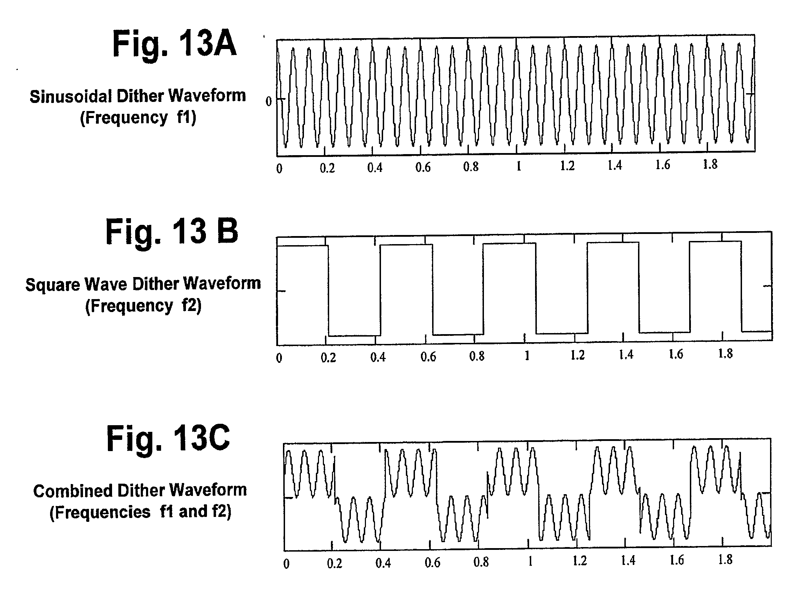

A two frequency waveform of the type discussed above is illustrated in Figures 13A - 13C, with each waveform being shown separately in Figures 13A and 13B and the two being shown in combination in Figure 13C. Although the relative magnitudes of the angular displacement of the two frequency components are shown as being roughly equal in this example, this is not a requirement.

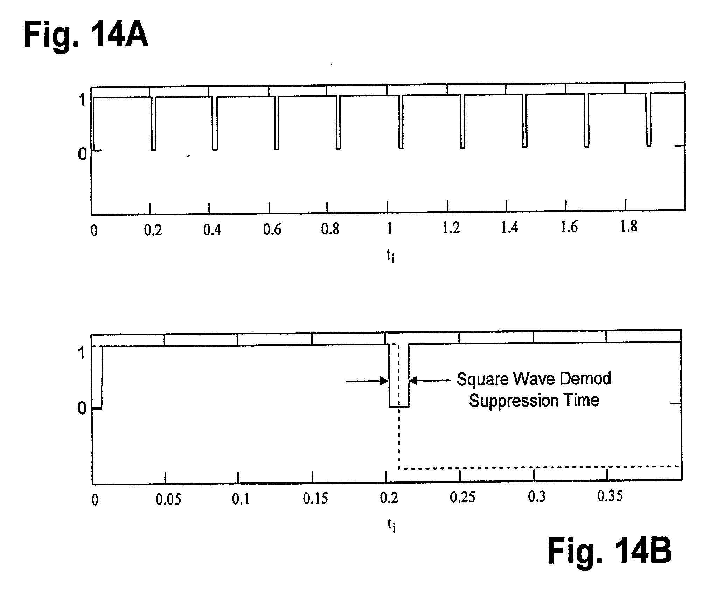

One advantage of this type of two-frequency dither modulation is that the two waveforms perform complementary functions. The quasi-square wave dither (excluding the transition times) is not subject to rate errors induced by sensor misalignment because it is not changing in angle while at either extreme. Therefore, the output demodulated from this frequency component will be a true rate signal free of misalignment error and, hence, insensitive to phase errors as well. In order to exclude from the demodulation the very large rate signals that occur during the transition times, the demodulation can be inhibited during these intervals using a demodulation suppression signal as show in Figures 14A - 14B. This signal guarantees that the large rate signal during the transition times is ignored or "zeroed" out during these intervals. The loss of this fraction of data is taken into account in the system signal-processing algorithm.

The sine wave dither signal, on the other hand, is subject to error due to misalignment. The difference in estimated rate between the two demodulated waveforms (square wave and sign wave) represents the misalignment induced error. The phase error associated with the sine wave demodulation, $\alpha_{sin}$, is given by:

$$\alpha_{sin} = \tan^{-1}(\Delta/M_{sin}),$$

where $\Delta$ is the difference in measured rate as determined using the two separate dither modulations and demodulations. This difference is $R_{sin} - R_{square}$, where "R" refers to the measured angular rate using one or the other of the modulation/demodulation methods. $M_{sin}$ is the total misalignment signal for the sine wave dither modulation which can be estimated, via $\cos \omega t$ demodulation, using equations (1.5) since the effect of small phase errors on the relatively large misalignment induced signal is negligible.

This estimate of $\alpha_{sin}$ can be obtained on a continuous basis. The value of $\alpha_{sin}$ provides the necessary input for real time correction of the phase error using one of the methods given above, thereby minimizing misalignment errors in a first harmonic technique implementation of bias cancellation.

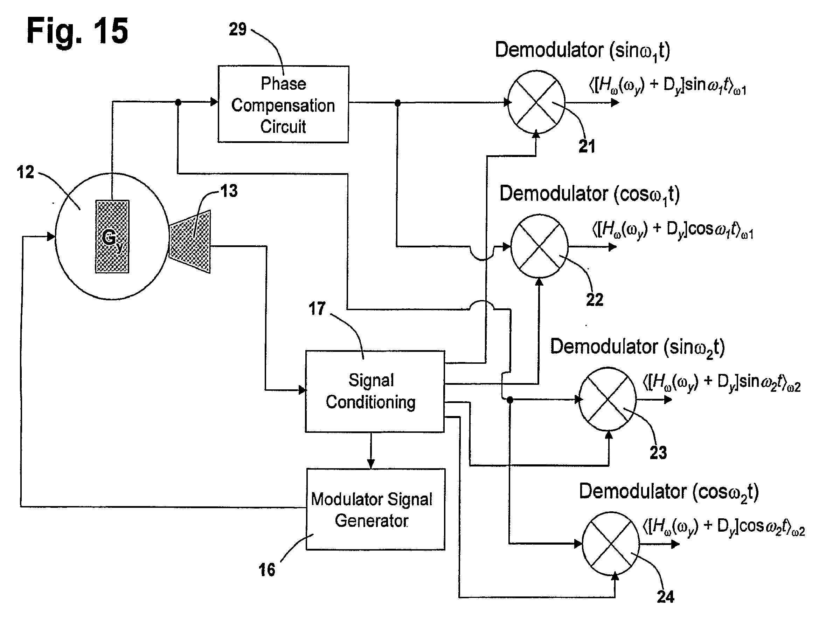

Figure 15 illustrates a system, which does not fall under the invention and which utilizes such two frequency first harmonic demodulation. This system is similar to that of Figure 11 except that the square wave signal at angular frequency $\omega_2$ is demodulated instead of the second harmonic.

In the system of Figure 15, modulator signal generator 16 generates the sine and square dither waveforms at separated frequencies and applies these two signals to modulator 12. The modulation sensor 13 delivers a dither amplitude signal to the signal conditioning circuit 17, and that circuit provides a feedback signal to the modulation signal generator 16, which is used to control the dither amplitudes to predetermined values, with the two frequencies of dither being separately controlled. The signal conditioning block also provides four phase reference signals, two of which are in phase quadrature at the sine dither frequency, $\omega_1$, and two of which in phase quadrature at the square wave dither frequency, $\omega_2$. The initial phase calibration of the system is such that the sine phase references approximately correspond to the proper phase for demodulating the desired rate offset, although they may contain small phase errors. The difference in measured rate $\Delta$ is calculated using the appropriately scaled outputs of demodulators 21, 23. $M_{sin}$ is calculated using the output of demodulator 22, also appropriately scaled. The appropriate scaling takes into account the amplitude and frequency difference between the two dither signals (square versus sine) as well as a factor of $4/\pi$ to account for the first harmonic content of a square wave versus a sine wave.

The phase error associated with the $\omega_1$ reference signals is calculated using the equation provided above and compensated using phase compensation circuit 29 or directly in the signal conditioning circuit as a phase adjustment to the reference signals.

The sine wave dither signal provides uninterrupted output, with no demodulation suppression being required. Therefore, there is no frequency response penalty for this signal as there could be when only square wave dither is used.

If a single frequency of dither is required for some applications, the two frequency method can still be used during an alignment phase to calibrate the phase error for sine demodulation. Alternatively, the square wave and sine wave dither can be used one at a time in sequence to accomplish the same thing, *i.e.*, system alignment or initialization. In this case it is possible to use a single pair of demodulators that are capable of operating at either of the two frequencies, with the phase reference signal being switched between $\sin\omega_1 t$ and $\sin\omega_2 t$ and between $\cos\omega_1 t$ and $\cos\omega_2 t$ for the two demodulators. Likewise, the modulator signal generator would have two modes of operation: sine wave and square wave. The two dither waveforms can, in this case, be either at the same frequency or at two separate frequencies.

If the effect of rapid transitions on system performance can be ignored, square wave dither, or two-point indexing, can be used by itself as a single frequency of dither. Such dithering can, for example, be used in the embodiments of Figures 4 and 7, where the demodulator phase references are adjusted by the signal conditioning electronics circuits 17 and are in phase with the square wave modulation signal. This type of dither may be particularly suitable for gyrocompassing applications.

To provide a full three degree-of-freedom (3DOF) system of gyros with bias cancellation, at least two of the dither modulation axes must be nominally perpendicular. As in the system of Figure 5, a single dither modulator can be used for two of the three gyros. The additional features of second harmonic demodulation or two frequency dither, although not shown in this figure, can be added for a pair of gyros sharing a common dither modulator.

For the third gyro of a 3DOF gyro Inertial Measurement Unit (IMU), it is necessary to apply a dither modulation to the Z-axis gyro measuring a vertical angular rate. Assuming the dither rate is applied about the X-axis (roll), then, up to the second-order terms, the Z-axis gyro output normal to a stationary leveled plane on the earth is given by the following equation:

$$\begin{aligned}\omega_z &= \Omega_D \cos(\phi + A\sin\omega t) + B_z + v_z,\\ &= \Omega_D\{\cos\phi[1 - \tfrac{1}{4}A^2(1 - \cos 2\omega t)] - A\sin\phi\sin\omega t\} + B_z + v_z,\end{aligned} \quad (2.1)$$

where $\Phi$ is an initial roll angle about the x-axis; $\Omega_D$ is the vertical (down) component of earth rotation rate at a given latitude; A is the modulation amplitude; $\omega$ is the dither angular frequency; and $B_z$ and $v_z$ are the bias and Gaussian random errors of the Z-gyro, respectively. Extracting the first and second harmonic components from equations (2.1), yields the first and second harmonic terms of $\omega_x$ and $\omega_y$ as follows:

$$H_\omega(\omega_z) = -\Omega_D A \sin\phi \sin\omega t, \quad (2.2)$$

$$H_{2\omega}(\omega_z) = \tfrac{1}{4}\Omega_D A^2 \cos\phi \cos 2\omega t \quad (2.3)$$

This second dither motion, i.e. mechanical modulation for the z-axis gyro, is applied about x-axis. The second dither rate vector is given by:

$$D_2^d \equiv (A\omega\cos\omega t \quad 0 \quad 0)^T.$$

Then, due to possible misalignment angles $\delta\theta_z$, and $\delta\theta_y$ about the x-axis with respect to the z- and y-axes, respectively, the dither rates can be transformed to the x-, y- and z-axes through the misalignment matrix $\delta Q_d^b$:

$$\begin{aligned}D_2^b = \delta Q_d^b D_2^d &= \begin{pmatrix} \cos\delta\theta_y\cos\delta\theta_z & -\sin\delta\theta_z & \cos\delta\theta_z\sin\delta\theta_y \\ \cos\delta\theta_y\sin\delta\theta_z & \cos\delta\theta_z & \sin\delta\theta_y\sin\delta\theta_z \\ -\sin\delta\theta_y & 0 & \cos\delta\theta_y \end{pmatrix}\begin{pmatrix} A\omega\cos\omega t \\ 0 \\ 0 \end{pmatrix},\\ &= \begin{pmatrix} \cos\delta\theta_y\cos\delta\theta_z A\omega\cos\omega t \\ \cos\delta\theta_y\sin\delta\theta_z A\omega\cos\omega t \\ -\sin\delta\theta_y A\omega\cos\omega t \end{pmatrix}.\end{aligned}$$

Then, the second component of $D_2^b$ measured by the Z-axis gyro is given by:

$$(D_2^b)_z = -\sin\delta\theta_y A\omega\cos\omega t$$

Then, applying the first harmonic technique for bias cancellation gives:

$$\begin{aligned}\langle [H_\omega(\omega_z) + (D_2^b)_z]\cos\omega t\rangle_\omega &= -\tfrac{1}{2}\sin\delta\theta_y A\omega,\\ \langle [H_\omega(\omega_z) + (D_2^b)_z]\sin\omega t\rangle_\omega &= -\tfrac{1}{2}\Omega_D A\sin\phi.\end{aligned} \quad (2.4)$$

In Equation (2.4), however, the first harmonic term corresponding to the desired rate signal is not observable, i.e., it is zero if $\phi = 0$. In other words, if the z-axis gyro input axis is vertical, the first harmonic demodulation result always gives a null value. This singularity problem can be resolved by letting $\phi \to \phi + \pi/2$, i.e., $Z \to Y2$ (as gyro input-axis), as illustrated in Figure 11. When this is done,

$$\omega_{y2} = -\Omega_D \sin(\phi + A\sin\omega t) + B_{y2} + v_{y2}, \qquad (2.5)$$

and

$$H_\omega(\omega_{y2}) = -\Omega_D A \cos\phi \sin\omega t. \qquad (2.6)$$

The second component of $D_2^b$ measured by Y2-gyro is given by:

$$\left(D_2^b\right)_{y2} = \cos\delta\theta_y \sin\delta\theta_z A\omega\cos\omega t \qquad (2.7)$$

Finally,

$$\left\langle [H_\omega(\omega_{y2}) + \left(D_2^b\right)_{y2}]\cos\omega t \right\rangle_\omega = \tfrac{1}{2}\cos\delta\theta_y \sin\delta\theta_z A\omega,$$
$$\left\langle [H_\omega(\omega_{y2}) + \left(D_2^b\right)_{y2}]\sin\omega t \right\rangle_\omega = -\tfrac{1}{2}\Omega_D A \cos\phi. \qquad (2.8)$$

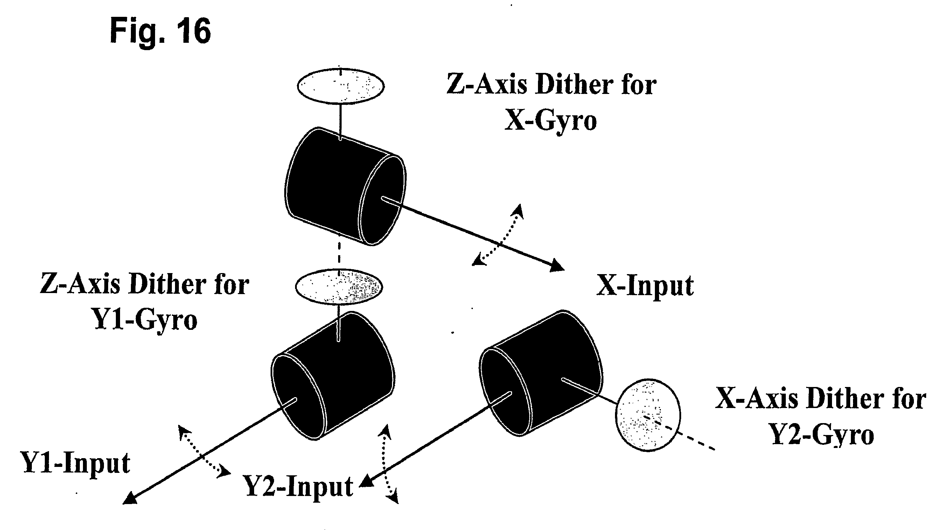

Equations (2.8) can be called the fundamental equations of the first harmonic bias cancellation technique for the third gyro (for measuring vertical angular rate). This 3-axis IMU configuration is illustrated in Figure 16.

Here, the X and Y1 gyros are dithered about the z-axis, either by a common dither modulator or separate ones. The Y2-gyro is initially aligned with input axis parallel to the Y1 gyro, but this gyro is responsible for measuring the vertical component of angular rate. This is made possible by dithering of the Y2 gyro about the X-axis. This inertial platform for a first harmonic implementation of bias cancellation for a three-axis IMU is particularly unique in that the three gyros have their input axes nominally in the same plane. The x-axis dither of the Y2 gyro permits measurement of the vertical rate component.

The foregoing analysis considered only the first harmonic technique for bias cancellation. For the second harmonic technique as applied to the vertical gyro, it follows from Equation (2.3) that

$$\left\langle H_{2\omega}(\omega_z)\cos 2\omega t \right\rangle_{2\omega} = \tfrac{1}{8}\Omega_D A^2 \cos\phi. \qquad (2.9)$$

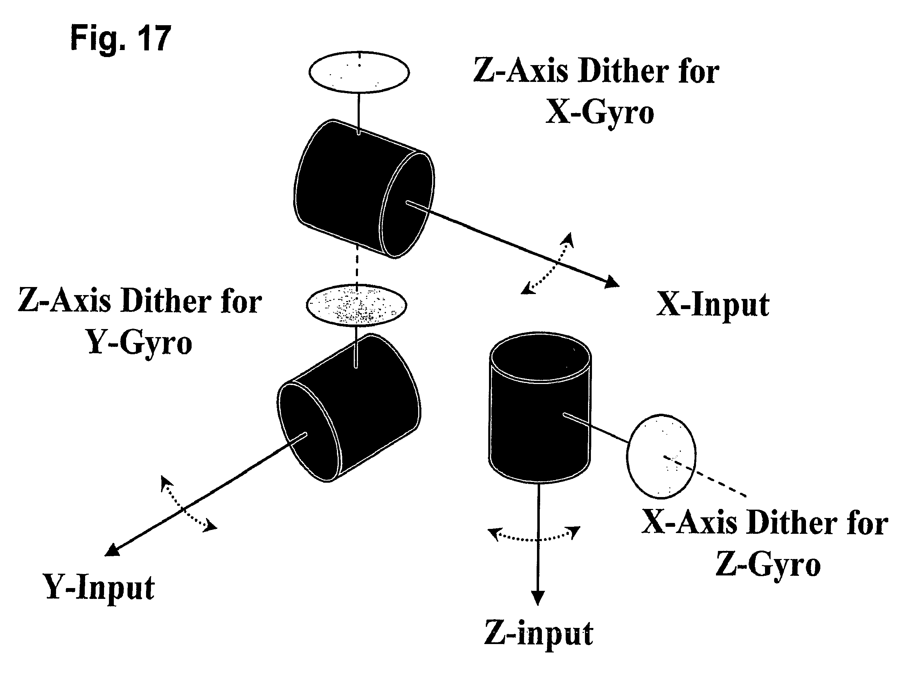

Equation (2.9) can be called the fundamental equations of the second harmonic bias cancellation technique for the third gyro (for measuring vertical angular rate). Unlike the first harmonic technique, using the second harmonic, the third gyro is aligned vertically and dithered about the x-axis, as can be seen in the embodiment of Figure 17.

Summarizing the equations derived above as Equations (1.5), (1.6), (2.8), and (2.9) provides a set of fundamental equations for the first harmonic technique for bias cancellation or washout for a three-axis gyro IMU (as in the embodiment of Figure 16):

$$\begin{cases} \left\langle [H_\omega(\omega_x)+D_x]\cos\omega t \right\rangle_\omega = \tfrac{1}{2}\cos\delta\theta_x \sin\delta\theta_y A\omega, \\ \left\langle [H_\omega(\omega_x)+D_x]\sin\omega t \right\rangle_\omega = -\tfrac{1}{2}\Omega_N A \sin\Psi, \\ \left\langle [H_\omega(\omega_y)+D_y]\cos\omega t \right\rangle_\omega = -\tfrac{1}{2}\sin\delta\theta_x A\omega, \\ \left\langle [H_\omega(\omega_y)+D_y]\sin\omega t \right\rangle_\omega = -\tfrac{1}{2}\Omega_N A \cos\Psi, \\ \left\langle [H_\omega(\omega_{y2})+(D_2^b)_{y2}]\cos\omega t \right\rangle_\omega = \tfrac{1}{2}\cos\delta\theta_y \sin\delta\theta_z A\omega, \\ \left\langle [H_\omega(\omega_{y2})+(D_2^b)_{y2}]\sin\omega t \right\rangle_\omega = -\tfrac{1}{2}\Omega_D A \cos\phi. \end{cases} \tag{3.1}$$

And for the second harmonic technique for a three-axis gyro IMU as in the system of Figure 17:

$$\begin{cases} \left\langle H_{2\omega}(\omega_x)\varphi_{2\omega}(t) \right\rangle_{2\omega} = \tfrac{1}{8}\Omega_N A^2 \cos\Psi, \\ \left\langle H_{2\omega}(\omega_y)\varphi_{2\omega}(t) \right\rangle_{2\omega} = \tfrac{1}{8}\Omega_N A^2 \sin\Psi, \\ \left\langle H_{2\omega}(\omega_z)\varphi_{2\omega}(t) \right\rangle_{2\omega} = \tfrac{1}{8}\Omega_D A^2 \cos\phi, \end{cases} \tag{3.2}$$

where

$$\varphi_{2\omega}(t) \equiv \begin{cases} \cos 2\omega t & \text{if modulation function is } \cos 2\omega t \\ \sin 2\omega t & \text{if modulation function is } \sin 2\omega t. \end{cases} \tag{3.3}$$

*Gyrocompassing*

From the second and fourth equations in (3.1), it follows that

$$\Psi = \tan^{-1} \frac{\left\langle [H_\omega(\omega_x)+D_x]\sin\omega t \right\rangle_\omega}{\left\langle [H_\omega(\omega_y)+D_y]\sin\omega t \right\rangle_\omega}. \tag{4.1}$$

Thus, a heading can be calculated using the first harmonic technique for signal processing of X-and Y-gyro readouts to obtain a coarse alignment.

Similarly, it follows from Equations (3.2) that

$$\Psi = \tan^{-1} \frac{\left\langle H_{2\omega}(\omega_y)\varphi_{2\omega}(t) \right\rangle_{2\omega}}{\left\langle H_{2\omega}(\omega_x)\varphi_{2\omega}(t) \right\rangle_{2\omega}}. \tag{4.2}$$

So, a heading can also be calculated using the second harmonic technique for signal processing of X-and Y-gyro readouts to obtain a coarse alignment.

From Equations (3.1), and setting $K \equiv 2A^{-1}$ (Equation 5.1) as a scale factor, it is possible to reconstruct strapdown gyro readouts of **X** (forward), **Y** (right-wing), and **Z** (down) gyro axes as illustrated in Figure 1 such that

$$\begin{cases} \hat{\omega}_x = -K\langle[H_\omega(\omega_y)+D_y]\sin\omega t\rangle_\omega \\ \hat{\omega}_y = K\langle[H_\omega(\omega_x)+D_x]\sin\omega t\rangle_\omega \\ \hat{\omega}_z = K\langle[H_\omega(\omega_{y2})+(D_2^b)_{y2}]\sin\omega t\rangle_\omega. \end{cases} \qquad (5.2)$$

Equations (5.2) express a set of 3-axis strapdown gyro outputs using the outputs obtained from the first harmonic bias cancellation technique. Similarly, from equations (3.2), and defining $K \equiv 8A^{-2}$ (Equation 5.3) as a scale factor, it is also possible to reconstruct the strapdown gyro readouts of X (forward), Y (right-wing), and Z (down) gyro axes using the second harmonic bias cancellation technique such that:

$$\begin{cases} \hat{\omega}_x = K\langle[H_{2\omega}(\omega_x)\varphi_{2\omega}(t)\rangle_{2\omega} \\ \hat{\omega}_y = -K\langle[H_{2\omega}(\omega_y)\varphi_{2\omega}(t)\rangle_{2\omega} \\ \hat{\omega}_z = -K\langle[H_{2\omega}(\omega_z)\varphi_{2\omega}(t)\rangle_{2\omega}. \end{cases} \qquad (5.4)$$

Now, performing angular measurements per Equations (5.2) or (5.4), angular rate measurement can be defined in a new frame [X' (forward), Y' (left-wing), and Z' (up-canopy)] (a common body frame) such that

$$\omega^b \equiv \begin{pmatrix} \omega_1^b & \omega_2^b & \omega_3^b \end{pmatrix}^T = \begin{pmatrix} \hat{\omega}_x & -\hat{\omega}_y & -\hat{\omega}_z \end{pmatrix}^T \qquad (5.5)$$

Then, assuming specific force measurements in the same X'-Y'-Z' body frame by a set of 3-axis strapdown accelerometers, we have

$$f^b \equiv \begin{pmatrix} f_1^b & f_2^b & f_3^b \end{pmatrix}^T \qquad (5.6)$$

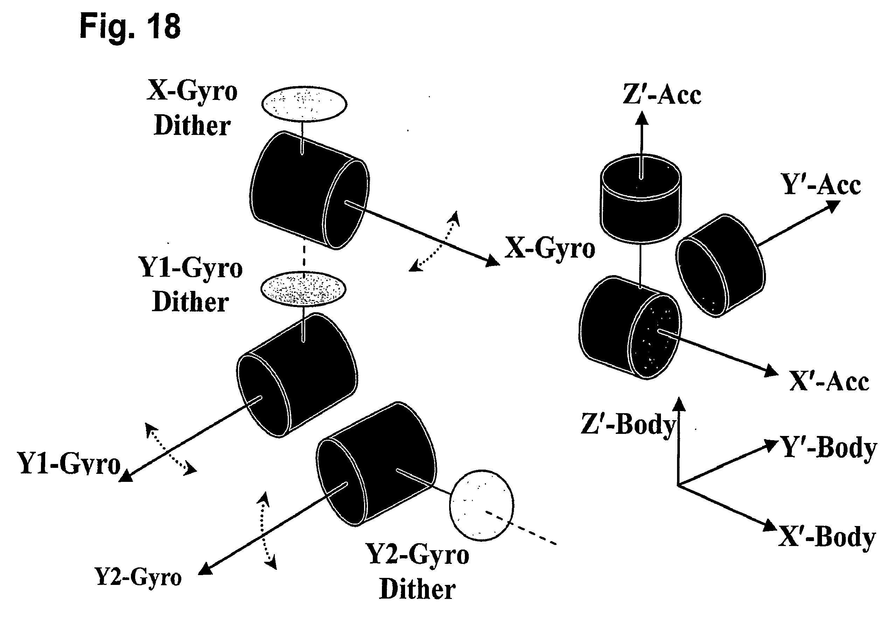

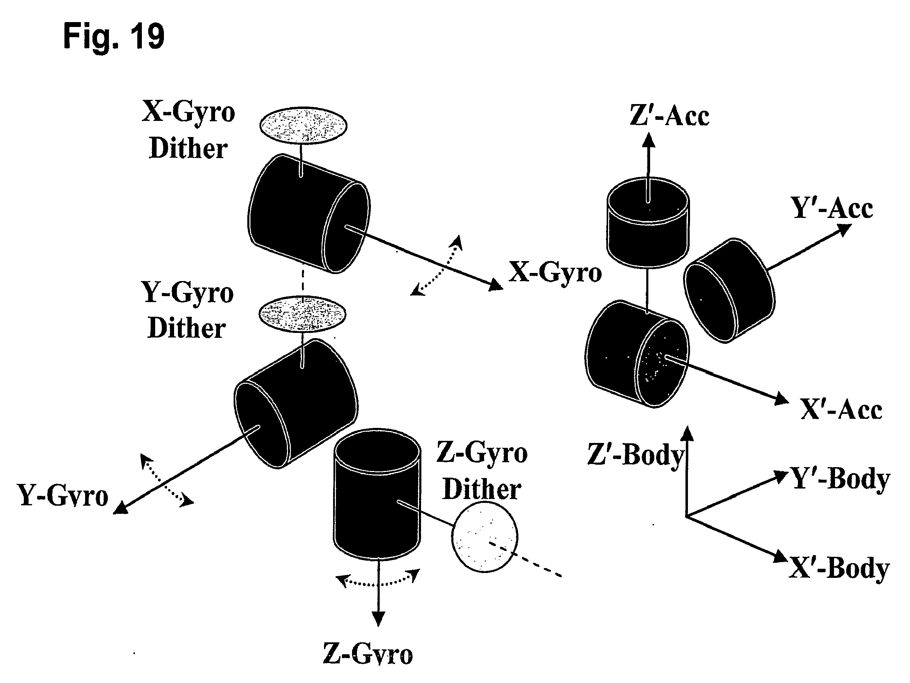

Figures 18 and 19 illustrate six-degree-of-freedom (6DOF) strapdown IMU's utilizing the 1st and 2nd harmonic techniques for gyro bias cancellation, respectively. A triad of three-axis accelerometers is contained in the IMU whose body frame coincides with the accelerometer frame. Now,

$$f^b = C_n^b f^n = (C_b^n)^T f^n = (C_{ij})^T f^n = (C_{ji}) f^n$$

$$= \begin{pmatrix} f_1^b \\ f_2^b \\ f_3^b \end{pmatrix} = \begin{pmatrix} C_{11} & C_{21} & C_{31} \\ C_{12} & C_{22} & C_{32} \\ C_{13} & C_{23} & C_{33} \end{pmatrix} \begin{pmatrix} 0 \\ 0 \\ g \end{pmatrix} = g \begin{pmatrix} C_{31} \\ C_{32} \\ C_{33} \end{pmatrix} = \begin{pmatrix} 0 \cdot C_{21} + g \cdot C_{31} \\ 0 \cdot C_{22} + g \cdot C_{32} \\ 0 \cdot C_{23} + g \cdot C_{33} \end{pmatrix}$$

$$\omega^b = C_n^b \omega^n = (C_b^n)^T \omega^n = (C_{ij})^T \omega^n = (C_{ji}) \omega^n$$

$$= \begin{pmatrix} \omega_1^b \\ \omega_2^b \\ \omega_3^b \end{pmatrix} = \begin{pmatrix} C_{11} & C_{21} & C_{31} \\ C_{12} & C_{22} & C_{32} \\ C_{13} & C_{23} & C_{33} \end{pmatrix} \begin{pmatrix} 0 \\ \Omega_{ie}\cos L \\ \Omega_{ie}\sin L \end{pmatrix} = \begin{pmatrix} \Omega_{ie}\cos L \cdot C_{21} + \Omega_{ie}\sin L \cdot C_{31} \\ \Omega_{ie}\cos L \cdot C_{22} + \Omega_{ie}\sin L \cdot C_{32} \\ \Omega_{ie}\cos L \cdot C_{23} + \Omega_{ie}\sin L \cdot C_{33} \end{pmatrix}$$

where $C_n^b$ is the direction cosine matrix from the local-level navigation frame (East-North-Up) to the body frame, with

$\Omega_{ie}$ being the Earth rotation rate and L being the latitude of the alignment location. Now expressing the above equations using decoupled forms for each body axis,

$$\begin{pmatrix} \dot{\omega}_j^b \\ f_j^b \end{pmatrix} = \begin{pmatrix} \Omega_{ie} \cos L & \Omega_{ie} \sin L \\ 0 & g \end{pmatrix} \begin{pmatrix} C_{2j} \\ C_{3j} \end{pmatrix}, \qquad (j = 1,2,3). \tag{5.7}$$

Normalizing the left hand side of the previous equation gives

$$\begin{pmatrix} \omega_j^b / \Omega_{ie} \\ f_j^b / g \end{pmatrix} = \begin{pmatrix} \cos L & \sin L \\ 0 & 1 \end{pmatrix} \begin{pmatrix} C_{2j} \\ C_{3j} \end{pmatrix}, \qquad (j = 1,2,3). \tag{5.8}$$

Namely, we may define the measurement model:

$$z_k^j \equiv Hx_k^j + v_k^j \tag{5.9}$$

where

$$z_k^j \equiv \begin{pmatrix} \omega_j^b / \Omega_{ie} \\ f_j^b / g \end{pmatrix} \tag{5.10}$$

$$H \equiv \begin{pmatrix} \cos L & \sin L \\ 0 & 1 \end{pmatrix} \tag{5.11}$$

$$x_k^j \equiv \begin{pmatrix} C_{2j} \\ C_{3j} \end{pmatrix} \tag{5.12}$$

$$v_k^j \equiv \begin{pmatrix} v\omega_k^j \\ vf_k^j \end{pmatrix} \tag{5.13}$$

at the $k$-th time step and for the j-th body axis ($j$=1, 2, 3). Finally, we also have a state space model:

$$x_{k+1}^j = \Phi_{k+1,k} x_k^j \tag{5.14}$$

where

$$\Phi_{k+1,k} \equiv \begin{pmatrix} 1 & 0 \\ 0 & 1 \end{pmatrix} \tag{5.15}$$

$$Q \equiv 0 \tag{5.16}$$

Assuming the strapdown platform is stationary during the alignment, the steady state model can be assumed as in the equations (5.14) - (5.16) above. Through a Kalman filtering process, the state vector

$$x_k^j = \begin{pmatrix} C_{2j}(k) \\ C_{3j}(k) \end{pmatrix}, \qquad (j = 1,2,3) \tag{5.17}$$

is estimated and updated at time step $k$. Then, since the direction cosine matrix (DCM) is orthogonal, namely,

$$C_b^n \left(C_b^n\right)^T = C_b^n \left(C_b^n\right)^{-1} = I, \qquad \text{(I = Identity Matrix)}$$

The coefficients of the first row of the DCM are then calculated by

$$\begin{aligned}
C_{11} &= C_{22}C_{33} - C_{32}C_{23}, \\
C_{12} &= C_{31}C_{23} - C_{21}C_{33}, \\
C_{13} &= C_{21}C_{32} - C_{31}C_{22}
\end{aligned} \tag{5.18}$$

To see this is so, let

$$A^1 \equiv \begin{pmatrix} C_{11} \\ C_{12} \\ C_{13} \end{pmatrix}; \quad A^2 \equiv \begin{pmatrix} C_{21} \\ C_{22} \\ C_{23} \end{pmatrix}; \quad \text{and } A^3 \equiv \begin{pmatrix} C_{31} \\ C_{32} \\ C_{33} \end{pmatrix}$$

Then we have

$$A^1 = A^2 \times A^3,$$

where $A^2$ and $A^3$ are known via Equation (5.17). Henceforth, Equations (5.18) completely determine the body-to-local-level DCM. Now the Euler angles are derived from the body-to-local-level DCM,

$$\begin{aligned}
Roll: &\quad \phi = \mathrm{atan}(C_{32}/C_{33}); \\
Pitch: &\quad \theta = \mathrm{atan}\left(C_{31}/\sqrt{C_{32}^2 + C_{33}^2}\right); \\
Heading: &\quad \Psi = \mathrm{atan}(C_{11}/C_{21}).
\end{aligned} \tag{5.19}$$

In addition, the desired orthogonality of the body-to-local-level $\mathsf{DCM} - C_b^n$ is always maintained by Equations (5.18).

### Misalignment Calibration

Misalignment estimation (for purposes of calibration) using the first harmonic technique for bias cancellation is given by Equations (1.5) and (2.8), or by Equations (3.1) such that

$$\left\langle [H_\omega(\omega_x)+D_x]\cos\omega t\right\rangle_\omega = \tfrac{1}{2}\cos\delta\theta_x \sin\delta\theta_y A\omega,$$

$$\left\langle [H_\omega(\omega_y)+D_y]\cos\omega t\right\rangle_\omega = -\tfrac{1}{2}\sin\delta\theta_x A\omega,$$

$$\left\langle [H_\omega(\omega_{y2})+\left(D_2^b\right)_{y2}]\cos\omega t\right\rangle_\omega = \tfrac{1}{2}\cos\delta\theta_y \sin\delta\theta_z A\omega. \qquad (6.1)$$

Defining a scale factor S

$$S = 2A^{-1}\omega^{-1}, \qquad (6.2)$$

from equations (6.1) and (6.2) it follows that

$$\begin{cases} \cos\delta\theta_x \sin\delta\theta_y = S \cdot \left\langle [H_\omega(\omega_x)+D_x]\cos\omega t\right\rangle_\omega, \\[4pt] \sin\delta\theta_x = -S \cdot \left\langle [H_\omega(\omega_y)+D_y]\cos\omega t\right\rangle_\omega, \\[4pt] \cos\delta\theta_y \sin\delta\theta_z = S \cdot \left\langle [H_\omega(\omega_{y2})+\left(D_2^b\right)_{y2}]\cos\omega t\right\rangle_\omega \end{cases} \qquad (6.3)$$

Assume that the misalignment angles are small enough, i.e.

$$\cos\delta\theta_x = \cos\delta\theta_y = \cos\delta\theta_z \approx 1 \text{ and } \sin\delta\theta_x \approx \delta\theta_x;\ \sin\delta\theta_y \approx \delta\theta_y;\ \sin\delta\theta_z \approx \delta\theta_z.$$

Then, Equations (6.3) become:

$$\begin{cases} \delta\theta_x \approx -S \cdot \left\langle [H_\omega(\omega_y)+D_y]\cos\omega t\right\rangle_\omega, \\[4pt] \delta\theta_y \approx S \cdot \left\langle [H_\omega(\omega_x)+D_x]\cos\omega t\right\rangle_\omega, \\[4pt] \delta\theta_z \approx S \cdot \left\langle [H_\omega(\omega_{y2})+\left(D_2^b\right)_{y2}]\cos\omega t\right\rangle_\omega. \end{cases} \qquad (6.4)$$

Thus, a three degree-of-freedom inertia! measurement unit (IMU) with bias cancellation, including means for determining dither misalignment angles, has been provided. The additional features described with reference to 1 and 2 degree-of-freedom systems can readily be included in the IMU's described, i.e., selective amplification of the modulation signal using the increased sensitivity at specific frequencies of one or more of the gyros; and estimation of, and compensation for, the phase errors at demodulation, including the use of two frequencies of dither and/or a combination of square wave and sine wave dither waveforms.

In yet another system, either in the form of a single sensor or as a system of sensors, the estimated misalignment angles, as in equations (6.4), are mechanically compensated for by use of a tillable platform, preferably one that is controllable by an electronic signal. Such a platform, preferably mounted between the dither modulator and a given gyro, can be constructed using piezoelectric or other suitable materials, as is well known. The effect of misalignment errors can be eliminated in real time using a feedback signal derived from the estimated misalignment angles and driving these angles to a null using the tiltable platform.

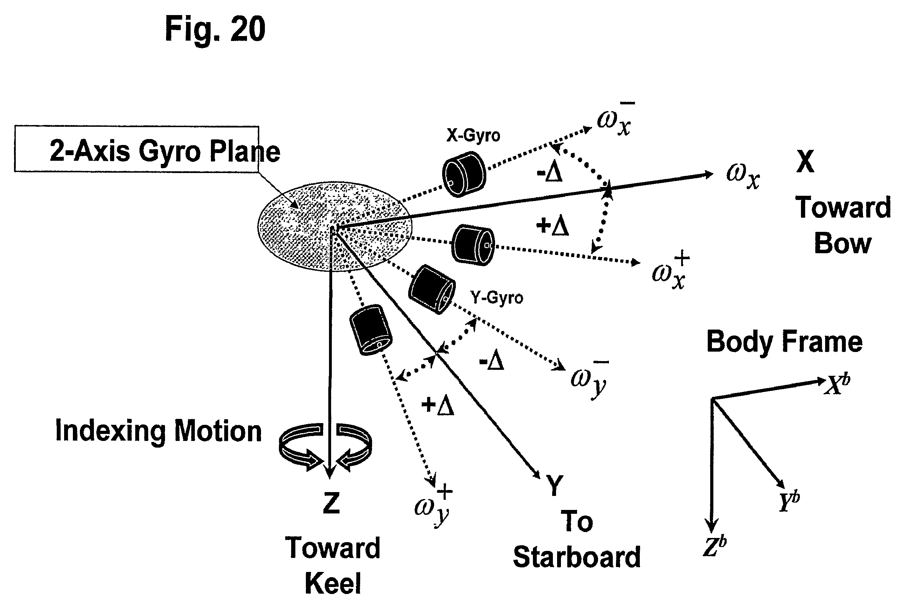

Two-Point Indexing (TPI), or square-wave modulation, can be considered in a six-degree-of-freedom (6-DOF) mechanization of a strapdown IMU comprising three gyros and three accelerometers. In the system illustrated in Figure 20, both three-axis sets of gyros and accelerometers are mechanically aligned to a vehicle's right orthogonal body coordinate system, i.e. X-Forward (Toward Bow), Y-Right- Wing (To Starboard), and Z-Down (Toward Keel) coordinate frame.

The 3-axis accelerometer readout $f_x^b \; f_y^b \; f_z^b$ may give pitch ($\theta$) and roll ($\Phi$) Euler angles of the vehicle's attitude with respect to the local vertical coordinate frame, i.e. north, east, down (NED) such that

$$\begin{cases} \theta = \arctan\left(-f_x^b \big/ f_z^b\right) \\ \phi = \arctan\left( f_y^b \big/ \sqrt{\left(f_x^b\right)^2 + \left(f_z^b\right)^2} \right) \end{cases} \tag{7.1}$$

From equation (7.1), the leveling direction cosine matrix (DCM) from the body to the locally leveled platform (not identical with NED-frame) can be calculated such that

$$C_b^l = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}. \tag{7.2}$$

Let $\omega_{ib}^b \equiv \begin{pmatrix} \omega_1^b & \omega_2^b & \omega_3^b \end{pmatrix}^T$ be angular rate vector consisting of the output of the strapdown 3-axis gyro unit. Now, we obtain the leveled gyro readout by matrix (7.2) such that

$$\begin{pmatrix} \omega_x \\ \omega_y \\ \omega_x \end{pmatrix} = C_b^l \omega_{ib}^b = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix} \begin{bmatrix} \omega_1^b \\ \omega_2^b \\ \omega_3^b \end{bmatrix}.$$

Thus,

$$\begin{pmatrix} \omega_x \\ \omega_y \\ \omega_z \end{pmatrix} = \begin{bmatrix} \omega_1^b \cos\theta + \omega_2^b \sin\theta\sin\phi + \omega_3^b \sin\theta\cos\phi \\ \omega_2^b \cos\phi - \omega_3^b \sin\phi \\ -\omega_1^b \sin\theta + \omega_2^b \cos\theta\sin\phi + \omega_3^b \cos\theta\cos\phi \end{bmatrix}. \tag{7.3}$$

Assume that each gyro has a large bias but low noise ($\leq 10^{-3}$ $\deg/\sqrt{hr}$ ). Now, the stationary and leveled X- and Y- gyro components in (7.3) are also modeled by

$$\begin{cases} \omega_x = \Omega\cos L \cos\theta\cos\Psi + \Omega\sin L \sin\theta + B_x + v_x, \\ \omega_y = \Omega\cos L(\sin\phi\sin\theta\cos\Psi - \cos\phi\sin\Psi) - \Omega\sin L \sin\phi\cos\theta + B_y + v_y, \\ \omega_z = \Omega\cos L(\sin\phi\sin\Psi + \cos\phi\sin\theta\cos\Psi) - \Omega\sin L \cos\phi\cos\theta + B_z + v_z, \end{cases} \tag{7.4}$$

where

$\Psi$ = vehicle's heading,
$\Omega$ = earth rate,
$L$ = vehicle's latitude
$B_i$ = i - gyro fixed bias,

$v_i$ = i - gyro zero - mean noise,

Tilts can be expressed using small angle approximations as:

$$\begin{cases} \phi \equiv -\delta\theta_x, \\ \theta \equiv -\delta\theta_y, \end{cases}$$

so that

$$\begin{cases} \sin\phi \cong -\delta\theta_x, \\ \cos\phi \cong 1, \\ \sin\theta \cong -\delta\theta_y, \\ \cos\theta \cong 1. \end{cases} \tag{7.5}$$

Substituting equations (7.5) into equations (7.4), and considering the X-and Y-readouts, we have

$$\begin{cases} \omega_x = \Omega\cos L\cos\Psi - \delta\theta_y\Omega\sin L + B_x + v_x \\ \omega_y = -\Omega\cos L\sin\Psi + \delta\theta_x\Omega\sin L + B_y + v_y \end{cases} \tag{7.6}$$

Taking a time average of (7.6) such that

$$\begin{cases} \overline{\omega}_x = \dfrac{1}{T}\int\limits_0^T \omega_x dt \\ \overline{\omega}_y = \dfrac{1}{T}\int\limits_0^T \omega_y dt \end{cases}$$

Assuming that the zero-mean gyro noise becomes negligible through the average-time T, we have

$$\begin{cases} \overline{\omega}_x = \Omega\cos L\cos\Psi - \delta\theta_y\Omega\sin L + B_x \\ \overline{\omega}_y = -\Omega\cos L\sin\Psi + \delta\theta_x\Omega\sin L + B_y \end{cases} \tag{7.7}$$

Now, as illustrated in Figure 20, applying an indexing motion about vertical Z-axis and rotating the two-axis, leveled gyro unit counter-clockwise on the level-plane about the local vertical down axis by the rotation angle, $\Delta$, we have

$$\begin{cases} \overline{\omega}_x^- = \Omega\cos L\cos(\Psi - \Delta) - \delta\theta_y\Omega\sin L + B_x \\ \overline{\omega}_y^- = -\Omega\cos L\sin(\Psi - \Delta) + \delta\theta_x\Omega\sin L + B_y \end{cases} \tag{7.8}$$

Next, rotate the gyro unit clockwise on the level-plane about the local vertical down axis by the rotation angle $2\Delta$, we have

$$\begin{cases} \overline{\omega}_x^+ = \Omega\cos L\cos(\Psi + \Delta) - \delta\theta_y\Omega\sin L + B_x \\ \overline{\omega}_y^+ = -\Omega\cos L\sin(\Psi + \Delta) + \delta\theta_x\Omega\sin L + B_y \end{cases} \tag{7.9}$$

Subtracting equations (7.9) from equations (7.8), we have

$$\begin{cases} \overline{\omega}_x^- - \overline{\omega}_x^+ = \Omega \cos L[\cos(\Psi - \Delta) - \cos(\Psi + \Delta)], \\ \overline{\omega}_y^- - \overline{\omega}_y^+ = -\Omega \cos L[\sin(\Psi - \Delta) - \sin(\Psi + \Delta)] \end{cases} \quad (7.10)$$

Thus, in (7.10), the misalignment terms of vertical earth rate disappear as well as fixed biases, so that

$$\begin{cases} \overline{\omega}_x^- - \overline{\omega}_x^+ = 2\Omega \cos L \sin \Psi \sin \Delta, \\ \overline{\omega}_y^- - \overline{\omega}_y^+ = 2\Omega \cos L \sin \Delta \cos \Psi. \end{cases} \quad (7.11)$$

Assume $\sin \Delta \neq 0$, i.e., $\Delta \neq n\pi$, where $n$ is an integer, so that from equations (7.11) it follows that

$$\frac{\overline{\omega}_x^- - \overline{\omega}_x^+}{\overline{\omega}_y^- - \overline{\omega}_y^+} = \frac{\sin \Psi}{\cos \Psi} = \tan \Psi \quad (7.12)$$

Solving equation (7.12) for $\Psi$, we obtain

$$\Psi = \arctan \frac{\overline{\omega}_x^- - \overline{\omega}_x^+}{\overline{\omega}_y^- - \overline{\omega}_y^+}. \quad (7.13)$$

Finally, using this value of $\Psi$ in equations (7.7), the sum of the gyro bias and the misalignment projection of the vertical earth rate is given by

$$\begin{cases} B_x - \delta\theta_y \Omega \sin L = \overline{\omega}_x - \Omega \cos L \cos(\arctan \frac{\overline{\omega}_x^- - \overline{\omega}_x^+}{\overline{\omega}_y^- - \overline{\omega}_y^+}), \\ B_y + \delta\theta_x \Omega \sin L = \overline{\omega}_y + \Omega \cos L \sin(\arctan \frac{\overline{\omega}_x^- - \overline{\omega}_x^+}{\overline{\omega}_y^- - \overline{\omega}_y^+}). \end{cases}$$

Or,

$$\begin{cases} B_x = \overline{\omega}_x - \Omega \cos L \cos(\arctan \frac{\overline{\omega}_x^- - \overline{\omega}_x^+}{\overline{\omega}_y^- - \overline{\omega}_y^+}) + \delta\theta_y \Omega \sin L, \\ B_y = \overline{\omega}_y + \Omega \cos L \sin(\arctan \frac{\overline{\omega}_x^- - \overline{\omega}_x^+}{\overline{\omega}_y^- - \overline{\omega}_y^+}) - \delta\theta_x \Omega \sin L. \end{cases} \quad (7.14)$$

We first need the value of latitude ($L$) to estimate the gyro bias. In the TPI method, X-and Y- misalignments affect the bias estimation by giving rise to the following bias estimation errors:

$$\begin{cases} \delta B_x = \delta\theta_y \Omega \sin L, \\ \delta B_y = -\delta\theta_x \Omega \sin L. \end{cases} \quad (7.15)$$

It is well known that

$$\begin{cases} \delta\theta_x = \beta_y / g, \\ \delta\theta_y = -\beta_x / g, \end{cases}$$

where $\beta_x$ and $\beta_y$ are X- and Y-accelerometer bias errors, respectively, and g is the earth's gravity. In Walnut Creek, CA, (Latitude = 37.9272°N), and assuming $\delta\theta_x = \delta\theta_y = 1$ [mrad] (leveled by 1-mg-grade accelerometer unit), Equations (7.14) give bias estimation errors of:

$$\begin{cases} \delta B_x = 0.0092 \text{ [deg/hr]}, \\ \delta B_y = -0.0092 \text{ [deg/hr]}. \end{cases} \qquad (7.16)$$

Unlike conventional north finder where the heading is derived by

$$\Psi = -\arctan\frac{\overline{\omega}_y}{\overline{\omega}_x},$$

the TPI alignment given by equation (7.13) is completely insensitive to any small mis-leveling of the gyro platform. This implies that the TPI method is superior to a conventional north finder or north seeking device. In TPI, only the autonomous gyro bias calibration given by equations (7.14) is affected by misalignment.

The invention has a number of important features and advantages. By eliminating the effects of bias offset, it makes it possible to use less expensive rate sensors or gyros which are relatively small in size but would otherwise be precluded from use because of their relatively large bias offsets. The smaller sensors lend themselves to use with smaller modulators, which provides a compact and relatively inexpensive system with improved accuracy. Fixed bias offsets are eliminated or cancelled without producing a spurious rotation rate signal, and the system can also provide cancellation of residual errors in offset compensation models.

The smaller sensors can mounted to equally smaller modulators, even modulators contained within the gyro package or made integrally with the sensing element itself. This permits a compact and relatively low cost system design with improved gyro accuracy. A full inertial measurement unit with gyro bias cancellation permits self-alignment or gyrocompassing and inertial navigation using sensors that heretofore have not been suitable for such applications.

It is apparent from the foregoing that a new and improved inertial measurement system has been provided. While only certain presently preferred embodiments have been described in detail, as will be apparent to those familiar with the art, certain changes and modifications can be made without departing from the scope of the invention as defined by the following claims.

**Claims**

1.   An inertial measurement system having a gyroscope ($G_y$) with an input axis (y) disposed in a plane (x-y), comprising a modulator (12) for dithering the input axis about a dither axis (z) substantially perpendicular to the plane at a dither frequency, and
**characterised by** first and second demodulators (21, 22; 23, 24) for demodulating signals from the gyroscope at the second harmonic of the dither frequency with phase references in phase quadrature to determine the rate of rotation of a component of externally applied rotation about an axis in the plane without sensitivity to misalignment between the dither axis and the plane.

2.   The system of claim 1 wherein the modulator (12) comprises a galvanometer.

3.   The system of claim 1 wherein the gyroscope ($G_y$) has a gain which varies with frequency, and the dither frequency is selected in accordance with the frequency at which the gain is the greatest in order to enhance signal-to-noise performance.

4.   The system of claim 3 including means (26, 27) for comparing the two demodulated signals to make the sensor response insensitive to changes in frequency difference between excitation and pickup frequencies.

5. The system of claim 3 wherein the dither frequency is adjusted to be exactly one-half the difference between the excitation and pickup frequencies.

6. The system of claim 1 further comprising third and fourth demodulators (21, 22) for demodulating signals from the gyroscope ($G_y$) at the first harmonic of the dither frequency, and means (17) for applying reference signals in phase quadrature to the third and fourth demodulators.

7. The system of claim 6 including means responsive to the first and second harmonic outputs for calculating the rate of rotation in the plane and the orientation of the system with respect to the axis about which the rate of rotation is sensed.

**Patentansprüche**

1. Inertial-Messsystem, welches ein Gyroskop ($G_y$) mit einer in einer Ebene (x-y) angeordneten Eingangsachse (y) aufweist, wobei das Messsystem einen Modulator (12) aufweist, um die Eingangsachse um eine Ditherachse (z) zu schwenken, welche bei Ditherfrequenz im Wesentlichen senkrecht zu der Ebene liegt, und wobei das Messsystem **dadurch gekennzeichnet ist, dass** erste und zweite Demodulatoren (21, 22; 23, 24) zum Demodulieren bzw. Gleichrichten von Signalen von dem Gyroskop mit Phasenreferenzen in Phasenquadratur an der zweiten Harmonischen der Ditherfrequenz vorgesehen sind, um die Drehzahl einer Komponente einer extern angelegten Drehung um eine Achse in der Ebene zu bestimmen, ohne dass das System gegenüber einer Fehlausrichtung zwischen der Ditherachse und der Ebene empfindlich ist.

2. System nach Anspruch 1, wobei der Modulator (12) einen Galvanometer umfasst.

3. System nach Anspruch 1, wobei das Gyroskop ($G_y$) eine Verstärkung aufweist, welche mit der Frequenz variiert, und wobei die Ditherfrequenz gemäß der Frequenz ausgewählt wird, bei der die Verstärkung am größten ist, um das Signal-Rausch-Verhalten zu verbessern.

4. System nach Anspruch 3, welches Einrichtungen (26, 27) zum Vergleich der beiden demodulierten Signale einschließt, um die Sensorantwort unempfindlich gegenüber Veränderungen der Frequenzdifferenz zwischen Erreger- und Abtastfrequenzen zu machen.

5. System nach Anspruch 3, wobei die Ditherfrequenz so angepasst ist, dass sie exakt die Hälfte der Differenz zwischen den Erreger- und Abtastfrequenzen beträgt.

6. System nach Anspruch 1, welches des Weiteren dritte und vierte Demodulatoren (21, 22) zur Demodulation von Signalen von dem Gyroskop ($G_y$) an der ersten Harmonischen der Ditherfrequenz aufweist, sowie Einrichtungen (17) zur Anlegung von Referenzsignalen in Phasenquadratur an die dritten und vierten Demodulatoren.

7. System nach Anspruch 6, welches Einrichtungen einschließt, die auf die ersten und zweiten harmonischen Ausgänge ansprechen, um die Drehzahl in der Ebene und die Ausrichtung des Systems mit Bezug auf die Achse, um welche die Drehzahl gemessen wird, zu berechnen.

**Revendications**

1. Système de mesure inertielle comportant un gyroscope ($G_y$) avec un axe d'entrée (y) disposé dans un plan (x-y), comprenant un modulateur (12) pour la vibration de l'axe d'entrée autour d'un axe de vibration (z) sensiblement perpendiculaire au plan à une fréquence de vibration, et **caractérisé par** des premier et deuxième démodulateurs (21, 22 ; 23, 24) pour démoduler des signaux provenant du gyroscope à la seconde harmonique de la fréquence de vibration avec des références de phase en quadrature de phase pour déterminer la vitesse de rotation d'une composante de rotation appliquée extérieurement autour d'un axe dans le plan sans sensibilité à un défaut alignement entre l'axe de vibration et le plan.

2. Système selon la revendication 1, dans lequel le modulateur (12) comprend un galvanomètre.

3. Système selon la revendication 1, dans lequel le gyroscope ($G_y$) a un gain qui varie avec la fréquence, et la fréquence de vibration est sélectionnée en fonction de la fréquence à laquelle le gain est le plus important afin d'augmenter la performance signal-bruit.

4. Système selon la revendication 3, comprenant des moyens (26, 27) pour comparer les deux signaux démodulés pour rendre la réponse du capteur insensible aux variations de la différence de fréquence entre des fréquences d'excitation et de collecte.

5. Système selon la revendication 3, dans lequel la fréquence d'oscillation est réglée pour être exactement à la moitié de la différence entre les fréquences d'excitation et de collecte.

6. Système selon la revendication 1, comprenant en outre des troisième et quatrième démodulateurs (21, 22) pour démoduler les signaux provenant du gyroscope ($G_y$) à la première harmonique de la fréquence de vibration, et des moyens (17) pour appliquer des signaux de référence en quadrature de phase aux troisième et quatrième démodulateurs.

7. Système selon la revendication 6, comprenant des moyens sensibles aux première et seconde sorties harmoniques pour calculer la vitesse de rotation dans le plan et l'orientation du système par rapport à l'axe autour duquel la vitesse de rotation est détectée.

# Fig. 1

**FIG. 2**

# FIG. 3

Externally Applied Rotation, Ω

EP 2 005 199 B1

# FIG. 4

Demodulator

$S_y \propto -m \cdot \Omega \cdot \sin(\theta_0)$

$S_y$

18

Demodulator

$S_x \propto m \cdot \Omega \cdot \cos(\theta_0)$

$S_x$

19

12

$G_y$

$G_x$

17

13

Signal
Conditioning

16

Modulator Signal
Generator

EP 2 005 199 B1

**Fig. 5**

Demodulator (sinωt)

$\langle [H_\omega(\omega_y) + D_y]\sin\omega t\rangle_\omega$

21

Demodulator (cosωt)

$\langle [H_\omega(\omega_y) + D_y]\cos\omega t\rangle_\omega$

22

Demodulator (sinωt)

$\langle [H_\omega(\omega_x) + D_x]\sin\omega t\rangle_\omega$

23

Demodulator (cosωt)

$\langle [H_\omega(\omega_x) + D_x]\cos\omega t\rangle_\omega$

24

12

$G_y$

$G_x$

17

Signal Conditioning

13

Modulator Signal Generator

16

EP 2 005 199 B1

# Fig. 6

EP 2 005 199 B1

Demodulator (sinωt)

21

$\langle[H_\omega(\omega_y) + D_y]\sin\omega t\rangle_\omega$

12

13

Demodulator (cosωt)

$\langle[H_\omega(\omega_y) + D_y]\cos\omega t\rangle_\omega$

22

17

Signal Conditioning

Modulator Signal Generator

16

# FIG. 7

Demodulator

$$S_{y1} \propto A \cdot \Omega \cdot \cos \Psi$$

**12** — $G_y$

**13**

**18**

Demodulator

$$S_{y2} \propto A^2 \cdot \Omega \cdot \sin \Psi$$

**19**

**17** — Signal Conditioning

Modulator Signal Generator

**16**

EP 2 005 199 B1

## Fig. 8

RELATIVE GYRO RESPONSE VS FREQUENCY

EP 2 005 199 B1

# Fig. 9

Demodulator (sin2ωt)

$\langle[H_{2\omega}(\omega_y)]\sin2\omega t\rangle_{2\omega}$

Demodulator (cos2ωt)

$\langle[H_{2\omega}(\omega_y)]\cos2\omega t\rangle_{2\omega}$

12

13

17

Signal Conditioning

Modulator Signal Generator

16

21

22

## Fig. 10

Demodulator (sin2ωt)

$\langle [H_{2\omega}(\omega_y)]\sin 2\omega t \rangle_{2\omega}$

21

Demodulator (cos2ωt)

$\langle [H_{2\omega}(\omega_y)]\cos 2\omega t \rangle_{2\omega}$

22

12

13

$G_y$

17

Signal
Conditioning

26

Output Signal
Comparator

27

16

Modulator Signal
Generator

Frequency
Correction

EP 2 005 199 B1

# Fig. 11

Demodulator (sinωt)

$\langle[H_\omega(\omega_y) + D_y]\sin\omega t\rangle_\omega$

21

Demodulator (cosωt)

$\langle[H_\omega(\omega_y) + D_y]\cos\omega t\rangle_\omega$

22

Demodulator (sin2ωt)

$\langle[H_{2\omega}(\omega_y)]\sin 2\omega t\rangle_{2\omega}$

23

Demodulator (cos2ωt)

$\langle[H_{2\omega}(\omega_y)]\cos 2\omega t\rangle_{2\omega}$

24

12

13

$G_y$

17

Signal Conditioning

Modulator Signal Generator

16

## Fig. 12

**29**

Phase Compensation Circuit

Demodulator (sinωt)

$\langle[H_\omega(\omega_y) + D_y]\sin\omega t\rangle_\omega$

**21**

**12**

$G_y$

**13**

Demodulator (cosωt)

$\langle[H_\omega(\omega_y) + D_y]\cos\omega t\rangle_\omega$

**22**

**17**

Signal Conditioning

Modulator Signal Generator

**16**

EP 2 005 199 B1

## Fig. 13A

Sinusoidal Dither Waveform
(Frequency f1)

## Fig. 13 B

Square Wave Dither Waveform
(Frequency f2)

## Fig. 13C

Combined Dither Waveform
(Frequencies f1 and f2)

EP 2 005 199 B1

Fig. 14A

Fig. 14B

Square Wave Demod
Suppression Time

# Fig. 15

**Phase Compensation Circuit** — 29

**Demodulator** $(\sin\omega_1 t)$

$\langle[H_\omega(\omega_y) + D_y]\sin\omega_1 t\rangle_{\omega 1}$

21

**Demodulator** $(\cos\omega_1 t)$

$\langle[H_\omega(\omega_y) + D_y]\cos\omega_1 t\rangle_{\omega 1}$

22

12

13

17 — **Signal Conditioning**

**Demodulator** $(\sin\omega_2 t)$

$\langle[H_\omega(\omega_y) + D_y]\sin\omega_2 t\rangle_{\omega 2}$

23

**Modulator Signal Generator** — 16

**Demodulator** $(\cos\omega_2 t)$

$\langle[H_\omega(\omega_y) + D_y]\cos\omega_2 t\rangle_{\omega 2}$

24

EP 2 005 199 B1

Fig. 16

**Fig. 17**

Z-Axis Dither for
X-Gyro

Z-Axis Dither for
Y-Gyro

X-Input

Y-Input

X-Axis Dither for
Z-Gyro

Z-input

EP 2 005 199 B1

# Fig. 18

EP 2 005 199 B1

**Fig. 19**

EP 2 005 199 B1

# Fig. 20

EP 2 005 199 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3736791 A